# EUROPEAN PATENT SPECIFICATION

(11) **EP 3 589 804 B1**
(45) Date of publication and mention of the grant of the patent: **25.10.2023**
(21) Application number: 18710663.8
(22) Date of filing: 27.02.2018
(51) Int. Cl.: E04H 1/12, B64D 11/02

(54) **AIRCRAFT LAVATORY COMPLEX FOR PEOPLE OF REDUCED MOBILITY**
FLUGZEUGTOILETTENKOMPLEX FÜR PERSONEN MIT REDUZIERTER MOBILITÄT
COMPLEXE SANITAIRE D'AVION POUR PERSONNES À MOBILITÉ RÉDUITE (PRM)

(30) Priority: 01.03.2017 US 201762465456 P; 26.04.2017 US 201715498299
(43) Date of publication of application: 08.01.2020
(73) Proprietor: B/E Aerospace, Inc., Winston Salem, NC 27105 (US)
(72) Inventor: BANFIELD, William J., Winston Salem, North Carolina 27105 (US); HASHBERGER, Frank E., Winston Salem, North Carolina 27105 (US)
(74) Representative: Boult Wade Tennant LLP
(86) International application number: PCT/US2018/019948
(87) International publication number: WO 2018/160559

(56) References cited:
- EP-A1- 2 974 960
- JP-A- H10 121 754
- US-A1- 2014 224 930
- US-A1- 2014 291 446
- US-B1- 8 752 339

## Description

### RELATED APPLICATIONS

### BACKGROUND

While all aircraft strive for efficiency and economy in its arrangement of components, this is particularly evident in smaller commercial aircraft. Single aisle aircraft, for example, are limited in terms of the number of seats that can be accommodated, since each additional row of seats, or seats themselves, represents a higher percentage of profitability as compared with larger aircraft. However, the floor plans of these smaller aircraft are typically fixed by other constraints, thereby limiting the number of seats available. Any arrangement that allows for additional seats represents a significant advance that corresponds with a consequential opportunity for profitability. Some systems are described in the following patent applications by B/E Aerospace, Inc.: U.S. Serial No. 14/225,123, entitled "Space Saving Aircraft Wheelchair Accessible Lavatory," filed March 25, 2014, and U.S. Serial No. 14/175,537, entitled "Compact Aircraft Galley and Lavatory Arrangement and Articulating Lavatory Partition for an Aircraft," filed February 7, 2014.

A lavatory complex installed in an aircraft may be located against an outboard wall portion of an aircraft passenger cabin, as opposed to the rear of the aircraft abutting the pressure dome, to conserve space. For ease of manufacture and ease of installation adjacent other interior structures, aircraft lavatories of the prior art typically have flat walls on all sides facing the aircraft interior as depicted by the lavatory envelope. Aircraft lavatories are typically located adjacent a doorway emergency exit path.

To provide a space for a crew member to stand by an emergency exit door for the purpose assisting passengers during an emergency evacuation of an aircraft, airworthiness authorities require that a 12-inch by 20-inch "assist space" be provided adjacent the aircraft exit doorway, alongside the exit path but outside the exit path itself. Attendant seats, occupied by flight attendants during takeoff, landing and at other times are typically mounted inboard of the assist spaces near the exit paths. The attendant seats most typically fold upward to a stowed position when not occupied so as to remain clear of the exit path.

Typical lavatory complexes consist of two lavatories which are configured with identical water supply and sewage systems and structural layouts to minimize production cost and certification effort. Each lavatory in the lavatory complex may be a physically separate structural unit with a gap designed therebetween to minimize the possibility that the units will contact one another during flight and/or emergency landing situations.

A variety of techniques have been employed for transferring a mobility-impaired passenger between an aisle wheelchair and a toilet. A 90° transfer in which the aisle wheelchair is positioned at a 90° angle to the toilet and an assistant lifts the mobility-impaired passenger and rotates the passenger onto the toilet, and vice versa, has been found to reduce the risk of injury to the assistant and is, therefore, a favored method for assisted transfers. A lateral transfer, in which a mobility-impaired passenger slides sideways from wheelchair to toilet and vice versa can be favored for an unassisted transfer in which the mobility-impaired passenger prefers to make the transfer unaided and has the upper body strength to do so.

Existing lavatory solutions for persons with reduced mobility (PRM) include a wall at a centerline of the lavatory complex on a twin aisle aircraft, and a dedicated aft lavatory or galley complex on a narrow body aircraft. PRM lavatories, located against the outboard wall portion of the aircraft, are typically single oversized units which occupy an enlarged footprint in the aircraft cabin.

Conventionally, a PRM lavatory can include an outboard folding removable center wall. Such removable wall is difficult to fold and remove, A substantial effort and space is required to fold the wall and move it outside the lavatory. To build a PRM lavatory, generally an existing footprint or layout of a typical lavatory needs to be modified. That, in turn, requires relocating utilities such as electrical conduits, water supplies and drain systems. There remains a continuing need to provide improved PRM lavatories that are easily accessible to a physically disabled person without compromising the seating arrangement or requiring redesign of the existing outboard lavatories of the aircraft. Examples of existing prior art include EP 2 974 960, which relates to a wheelchair- accessible aircraft lavatory unit; US 8 752 339, which relates to a convertible door system including a door accessible compartment having a movable dividing wall. US 2014/291446 A1 discloses a wheelchair-accessible toilet with a folding divider door.

### SUMMARY OF ILLUSTRATIVE EMBODIMENTS

Apparatus and methods relate to a reconfigurable lavatory monument having two adjacent independent compartments separated by a retractable divider wall that, when retracted to unify the compartment spaces, substantially blocks access from the unified space to a redundant sink area. In an illustrative example, the divider wall may have two articulatable panels. In some examples, at least one of the panels in the retracted position may securely lock to the floor or the ceiling. The two panels may, in various embodiments, slidably retract and extend in a telescoping or pocket relationship, for example. Securely retracting to a position that substantially blocks access to the redundant sink area may advantageously avoid injury, ensure line of sight privacy, and/or minimize exposure to a wet sink for an assistant in the unified space to aid a person of reduced mobility (PRM) using the lavatory, for example, during a flight onboard an aircraft.

In a preferred embodiment, a retrofittable PRM lavatory complex is provided which occupies the same footprint as a preexisting outboard dual-lavatory complex. The two lavatories are separated by a common articulating wall that is typically positioned in a standard operating position in which the lavatory complex operates as a standard dual-lavatory complex. The common wall may be moved by a flight attendant or passenger to a PRM position in which the lavatory spaces are combined to accommodate a person with reduced mobility. In the most preferred embodiments, the common wall may be articulated to the PRM position from within the lavatory with the doors closed, which facilitates the conversion to a PRM lavatory and advantageously avoids intrude into the aisle space during the conversion. Another substantial advantage is that the PRM complex may be readily installed into a space previously occupied by a standard outboard dual-lavatory complex with without substantially modifying electrical, environmental or plumbing supplies or conduits.

Various embodiments may achieve one or more advantages. For example, in some implementations, the retracted divider may form a barrier that may conveniently keep the assistant separated from a wet sink area. In some examples, the retracted divider may form a barrier that may advantageously protect the sink area from collision or abrasion from a wheelchair, for example. Moreover, in some embodiments, the substantially L-shaped configuration of the panels in the retracted position may advantageously protect an assistant from inadvertent collisions (e.g., with a faucet during instability) that could potentially cause injury. In addition, it may also shield the assistant from backing into a wet sink area of the second sink, which could cause the assistant's clothes to become soiled or uncomfortably damp during a flight. Furthermore, the configuration of the panels may maintain visual line-of-sight privacy in the event that the door to the second compartment is inadvertently opened while the lavatory compartment is in use by a PRM, for example.

Further advantages may be found, for example, in that the movable wall can be moved even when a toilet seat is open. However, an attendant of a person with reduced mobility may rest on the seat of the second toilet with his or her knees angled toward the first toilet. Thus, an attendant may rest while attending to the person with reduced mobility rather than remaining in a standing position. Alternatively, a wheelchair may be stowed within the space between the stowed movable wall and the second toilet.

Still further advantages may be found, for example, in that a lavatory monument in the open configuration may be simultaneously occupied by a disabled person and an assistant. For example, the disabled person and the assistant can enter an enlarged unified space via a first compartment and the assistant can move into a second compartment. In some implementations, a wheelchair can be positioned next to the toilet. In some examples, the assistant can help a disabled person to move from the wheelchair to the toilet.

The forgoing general description of the illustrative implementations and the following detailed description thereof are merely exemplary aspects of the teachings of this disclosure, and are not restrictive.

### BRIEF DESCRIPTION OF THE DRAWINGS

The accompanying drawings, which are incorporated in and constitute a part of the specification, illustrate one or more embodiments and, together with the description, explain these embodiments. The accompanying drawings have not necessarily been drawn to scale. Any values dimensions illustrated in the accompanying graphs and figures are for illustration purposes only and may or may not represent actual or preferred values or dimensions. Where applicable, some or all features may not be illustrated to assist in the description of underlying features. In the drawings:
FIG. 1 is partial top view of an aircraft cabin with an exemplary lavatory outboard dual monument.
FIG. 2A is a top view of a lavatory monument in the having an exemplary foldable divider wall in a closed position.
FIG. 2B is a top view of the lavatory monument of FIG. 2A with the wall in a first exemplary partially open position.
FIG. 2C is a top view of the lavatory monument of FIG 2A. with the wall in a fully open position.
FIG. 2D is a top view of the lavatory monument of FIG. 2A with the exemplary divider wall in a fully open position and simultaneously occupied by a disabled person and an assistant.
FIG. 3 illustrates a cross-sectional view of an exemplary lavatory monument.
FIG. 4A illustrates a top view of a lavatory monument with an exemplary telescoping door in a closed position.
FIG. 4B illustrates a top view of the lavatory monument of FIG. 4A with the telescoping door in an exemplary first partially open position.
FIG. 4C illustrates a top view of the lavatory monument of FIG. 4A with the telescoping door in an exemplary second partially open position.
FIG. 4D illustrates a top view of the lavatory monument of FIG. 4A with the telescoping door in an exemplary fully open position.
FIG. 5A illustrates a top view of a lavatory monument with an exemplary pocket sliding door in a closed position.
FIG. 5B illustrates a top view of the lavatory monument of FIG. 5A with the pocket sliding door in an exemplary first partially open position.
FIG. 5C illustrates a top view of the lavatory monument of FIG. 5A with the pocket sliding door in an exemplary second partially open position.
FIG. 5D illustrates a top view of the lavatory monument of FIG. 5A with the pocket sliding door in an exemplary fully open position.
FIG. 6A is a perspective view of a lavatory monument with an exemplary full-length pocket sliding door.
FIG. 6B is an isolated perspective view of an exemplary reduced-height pocket with a sliding door.
FIG. 7A illustrates a top view of a lavatory monument with an exemplary pocket sliding door in a closed position.
FIG. 7B illustrates a top view of the lavatory monument of FIG 7A with the pocket sliding door in an exemplary first partially open position about a flexible hinge.
FIG. 7C illustrates a top view of the lavatory monument of FIG. 7A with the pocket sliding door in an exemplary second partially open position about a flexible hinge.
FIG. 7D illustrates a top view of the lavatory monument of FIG. 7A with the pocket sliding door in an exemplary fully open position about a flexible hinge.
FIG. 8A illustrates a top view of a lavatory monument with an exemplary folding door with no handles in a closed position.
FIG. 8B illustrates a top view of the lavatory monument of FIG. 8A with the folding door with no handles in a first exemplary partially open position.
FIG. 8C illustrates a top view of the lavatory monument of FIG. 8A with the folding door with no handles in a second exemplary partially open position.
FIG. 8D illustrates a top view of the lavatory monument of FIG. 8A with the folding door with no handles in an exemplary fully open position.

### DETAILED DESCRIPTION OF ILLUSTRATIVE EMBODIMENTS

The description set forth below in connection with the appended drawings is intended to be a description of various, illustrative embodiments of the disclosed subject matter. Specific features and functionalities are described in connection with each illustrative embodiment; however, it will be apparent to those skilled in the art that the disclosed embodiments may be practiced without each of those specific features and functionalities.

Reference throughout the specification to "one embodiment" or "an embodiment" means that a particular feature, structure, or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures or characteristics may be combined in any suitable manner in one or more embodiments. Further, it is intended that embodiments of the disclosed subject matter cover modifications and variations thereof

It must be noted that, as used in the specification and the appended claims, the singular forms "a," "an," and "the" include plural referents unless the context expressly dictates otherwise. That is, unless expressly specified otherwise, as used herein the words "a," "an," "the," and the like carry the meaning of "one or more." Additionally, it is to be understood that terms such as "left," "right," "top," "bottom," "front," "rear," "side," "height," "length," "width," "upper," "lower," "interior," "exterior," "inner," "outer," and the like that may be used herein merely describe points of reference and do not necessarily limit embodiments of the present disclosure to any particular orientation or configuration. Furthermore, terms such as "first," "second," "third," etc., merely identify one of a number of portions, components, steps, operations, functions, and/or points of reference as disclosed herein, and likewise do not necessarily limit embodiments of the present disclosure to any particular configuration or orientation.

Furthermore, the terms "approximately," "proximate," "minor," and similar terms generally refer to ranges that include the identified value within a margin of 20%, 10% or preferably 5% in certain embodiments, and any values therebetween.

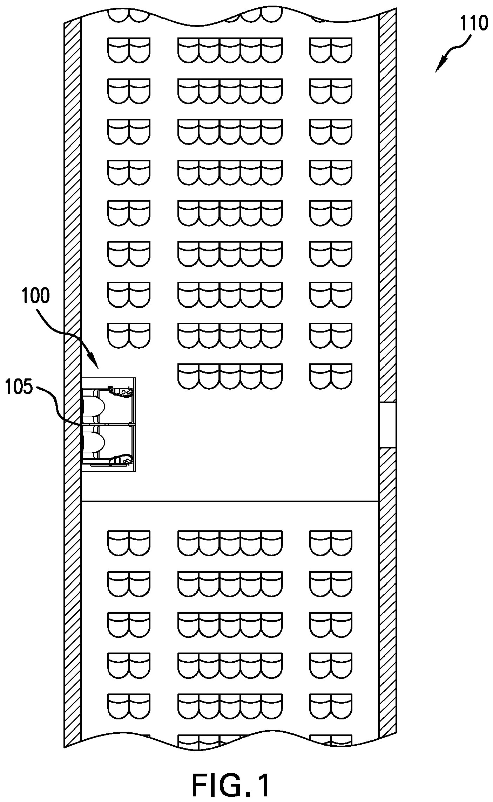

FIG. 1 is partial top view of an aircraft cabin with an exemplary lavatory monument. In the depicted figure, a lavatory monument 100 is shown as located along an outboard wall 105 approximately in the middle of the fuselage (e.g., near a wing) of an aircraft 110. In the depicted example, the lavatory monument 100 is opposite a door. The outboard wall 105 may be formed as a curved body of the fuselage of the aircraft 110. The lavatory monument 100 is a complex of two adjacent compartments separated by a divider wall. In various embodiments, the lavatory monument 100 may be selectively configurable from two separated compartments to a unified private lavatory space by selectively stowing the divider wall to provide a combined and enlarged space for persons with restricted mobility (PRM), or to provide room for an assistant to be in the lavatory space as an aid for the PRM. In some embodiments, the divider wall may be retracted to form the unified space, and then secured in an open position, for example, with floor and/or ceiling locks. In some implementations, the retracted divider may form a barrier that may conveniently keep the assistant separated from a wet sink area. In some implementations, the retracted divider may form a barrier that may advantageously protect the sink area from collision or abrasion from a wheelchair, for example.

In the depicted example, an area between the lavatory monument 100 and the door is an open area with some extra space for maneuvering, for example, a wheel chair. Note that the drawing is not necessarily shown to scale, and is merely illustrative of one possible configuration of the lavatory monument 100 in a cabin of the aircraft 110. Configuration of the aisle and seats may be in any suitable arrangement that permits ingress and egress through either of the two doors provided in the lavatory monument 100. In some examples, the lavatory monument may be located in an aft portion of the aircraft (e.g., near the pressure dome), or in a forward portion of the aircraft (e.g., immediately aft of the cockpit).

In an illustrative example, the lavatory monument 100, for example, may be designed for lateral installation, with the closed doors of the lavatory monument 100 facing forward or aft, depending on configuration in the fuselage. In some examples, the lavatory compartment doors (in the closed position) may be oriented to be parallel to a passenger aisle, such as the center aisle that runs longitudinally from front to aft in a narrow body commercial aircraft.

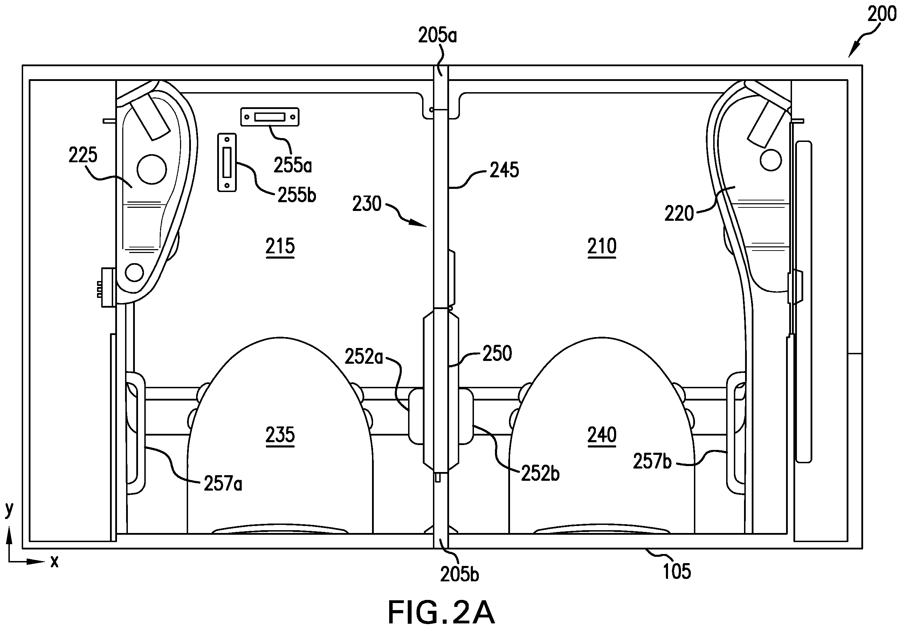

FIG. 2A is a top view of a lavatory monument in a first configuration according to an exemplary embodiment of the present disclosure, having an exemplary foldable divider wall in a closed position. A lavatory monument 200 includes a rectangular frame supporting an inner frame segment 205a and an outer frame segment 205b aligned to approximately bisect the frame so as to define a first compartment 210 and a second compartment 215. The compartments 210, 215 have a "mirror image" arrangement of a sink 220 and a sink 225, respectively. The first compartment 210 and the second compartment 215 are separated by a movable wall 230 that provides privacy between a second toilet 235 in the second compartment 215 and a first toilet 240 in the first compartment 210. The first compartment 210 and the second compartment 215 are substantially similar and a substantial mirror image of each other when configured as divided by the wall 230 into two separate compartments.

As depicted in FIG. 2A, the movable wall 230 is in a closed (or first) position. When the movable wall 230 is closed (which may also be referred to herein as the first configuration), the movable wall 230 allows independent access to the first compartment 210 and the second compartment 215.

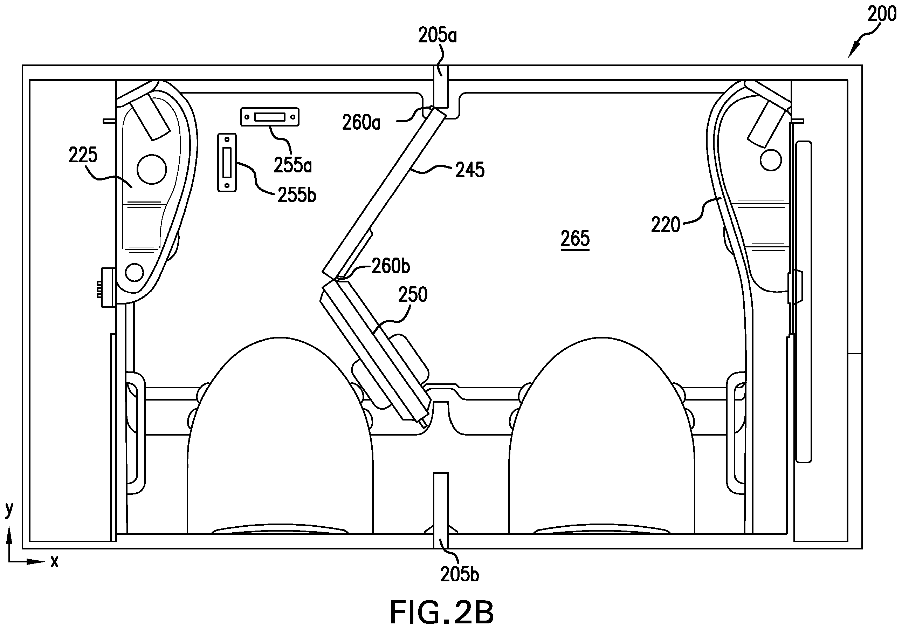

As will be described in further detail with reference to FIGS. 2B-2D, the movable wall 230 includes a first panel 245 and a second panel 250. When the wall is reconfigured to a stowed position, the panels 245, 250 may be secured, respectively, to a pair of floor locks 255a, 255b located in the floor of the second compartment 215. Stability bars 257a and 257b are also mounted for use as support in compartments 210 and 215.

The first toilet 240 is located against the outboard wall 105 approximately at a center of the first compartment 210. The first sink 214 is connected to a water supply and sewage system (not shown). The first compartment 210 is also connected to electrical and environmental utilities (not shown). In a retrofit application, the layout of the first compartment 210 preferably matches that of a previously installed lavatory complex such that the utilities can be connected without substantial rework or relocation of the utilities.

The first compartment 210 provides a first space for a person to move inside the first compartment 210. The first space has a limited size and dimension constrained by the door (not shown), the movable wall 230, the first sink 220 and the first toilet 240. As such, the first compartment 210 has, in the preferred embodiment, enough room for only one person to move about in a comfortable manner. Furthermore, if a person with reduced mobility (e.g., disabled, elderly, injured, etc.) enters the first compartment 210, then an assistant (the second person) may not have sufficient space to assist the person on to the first toilet 240. Further, if the first person requires a wheelchair, there may be no room to accept the wheelchair within the first compartment 210.

Similarly, the second compartment 215 includes the second toilet 235 and the second sink 225. The second toilet 235 is located against the outboard wall 105 approximately at a center. Furthermore, the second compartment 215 also includes a second space, similar to the first space. The second compartment 215 is, in a preferred embodiment, substantially a mirror image of the first compartment 210. In a retrofit application, the layout of the second compartment 220 preferably matches that of a previously installed lavatory complex such that the utilities can be connected without substantial rework or relocation of the utilities.

In the example depicted in FIG. 2A, the movable wall 230 is in closed (or first) position. The panels 245 and 250 are aligned with the frame segments 205a and 205b. The first panel 245 is hingedly connected to the inner frame segment 205a, while the second panel 250 is locked to the outer frame segment 205b. In some embodiments, one or both of the panels 245, 250 may also be releasably locked to the floor and/or ceiling (not shown).

In the embodiment depicted in FIG. 2A, the second panel 250 includes a first handle 252a and a second handle 252b on either side of the second panel 250 to provide support to a person using the toilet in each of the compartments 210, 215. Handles 252a and 252b are primarily used to position the movable wall 230, but may also provide support for passengers while the movable wall 230 is in the closed (or first) position. The handles may, in alternative embodiments, be adapted to fold upwards to into a stowed condition which is generally flush with the panel on which the handles are mounted. This may provide additional clearance for folding the door assembly into the second position in which the two lavatory compartments are combined.

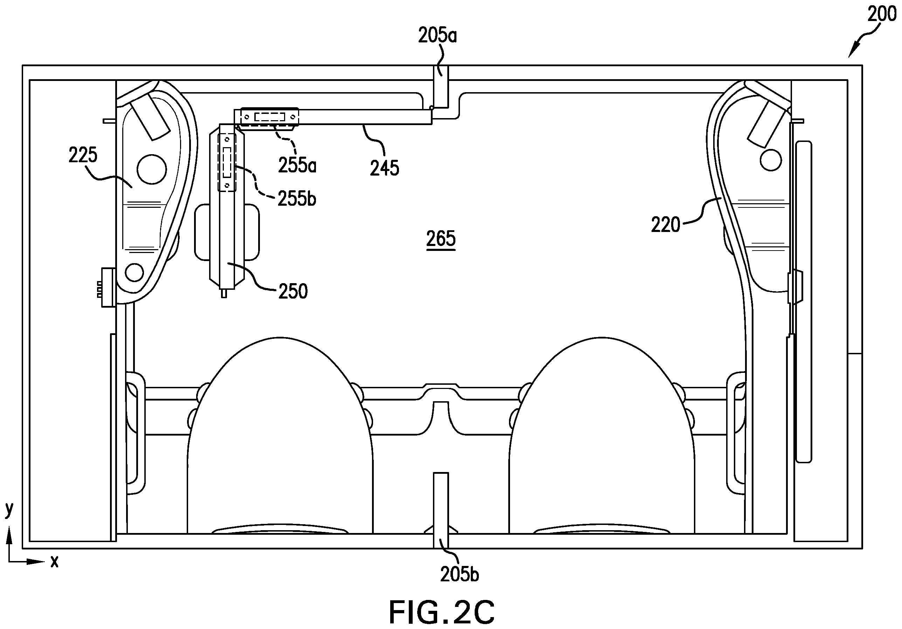

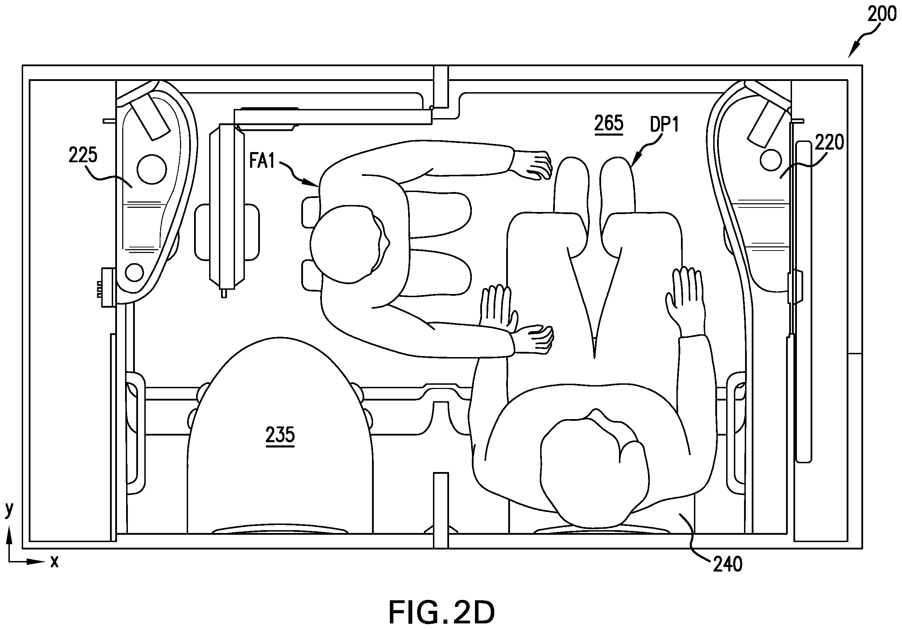

FIGS. 2B-2D are top views of the lavatory monument 200 illustrating exemplary operation of the movable wall 230 while opening the movable wall 230. FIG. 2B is a top view of the lavatory monument of FIG. 2A with the wall in a first exemplary partially open position. FIG. 2C is a top view of the lavatory monument of FIG. 2A with the wall in a fully open position. FIG. 2D is a top view of the lavatory monument of FIG. 2A with the exemplary divider wall in a fully open position and simultaneously occupied by a disabled person and an assistant.

In FIG. 2B, the panels 245, 250 are unlocked from the frame segment 205b and the floor and/or ceiling locks. Once unlocked, the first panel 245 and the second panel 250 can articulate simultaneously. The first panel 245 or the second panel 250 can be pushed causing the first panel 245 to rotate about a first hinge 260a coupled to the inner frame segment 205a. Simultaneously, the second panel 250 rotates about a second hinge 260b that hingedly couples the second panel 250 to the first panel 245. When rotated, the second panel 250 is displaced into the second compartment 215. The articulation about the hinges 260a, 260b allows the second panel 250 to clear the second toilet 235. As such, the second panel 250 is displaceable around the second toilet 235, as the first panel 245 moves towards the first lock slot 255a.

In FIG. 2C, the first panel 245 is shown as rotated approximately by 90° from its initial closed (or first) position, and as releasably coupled or locked to the first lock slot 255a. Similarly, the second panel 250 is rotated approximately parallel to its initial closed orientation and locked in the second lock slot 255b. The second panel 250 is in front of the second sink 225 and, as such, the second panel 250 is in at least a partial blocking relationship that may restrict access to the second sink 225. However, in the open orientation, the first sink 220 and the first toilet 240 in the first compartment 210 are accessible.

In various implementations, an assistant could, for example, conveniently sit on the lid of the second toilet 235 while assisting an individual using the first toilet 240 or the first sink 220. Further, the third space 265 has a greater floor space and volume than either of the compartments 210, 215, which may advantageously allow two people to occupy the lavatory monument 200, as shown in FIG. 2D.

Moreover, in some embodiments, the substantially L-shaped configuration of the panels 245, 250 may advantageously protect an assistant from inadvertently collision (e.g., with a faucet during instability) that could potentially cause injury. In addition, it may also shield the assistant from backing into a wet sink area of the second sink 225, which could cause the assistant's clothes to become soiled or uncomfortably damp during a flight. Furthermore, the substantially L-shaped configuration of the panels 245, 250 may maintain visual line-of-sight privacy in the event that the door to the second compartment 215 is inadvertently opened while the lavatory compartment 200 is in use by a PRM, for example.

The position of the second panel 250 after locking to the second lock slot 255b is such that the second toilet 235 is partially accessible. However, an attendant of a person with reduced mobility may sit on the seat of the second toilet 235 with his or her knees angled toward the first toilet 240. Thus, an attendant may be in a seated position while attending to the person with reduced mobility rather than remaining in a standing position. Alternatively, a wheelchair may be stowed within the space 372 between the stowed movable wall 230 and the second toilet 235.

FIG. 2D is a top view of the lavatory monument 200 in the open configuration simultaneously occupied by a person of reduced mobility DPI and an assistant FA1. For example, the person of reduced mobility DP1 and the assistant FA1 can enter the third space 265 via the first compartment 210 and the assistant FA1 can move into the second compartment 215. In some implementations, a wheelchair can be positioned next to the second toilet 235. In some examples, the assistant FA1 can help the person of reduced mobility DP1 to move from the wheelchair to the first toilet 240.

It can be appreciated by a person of ordinary skill in art that the mirror image operation of movable wall 230 can be achieved by reversing the compartments 210, 215. Such a configuration would be a mirror image of the configuration discussed with respect to FIGS. 2A-2D.

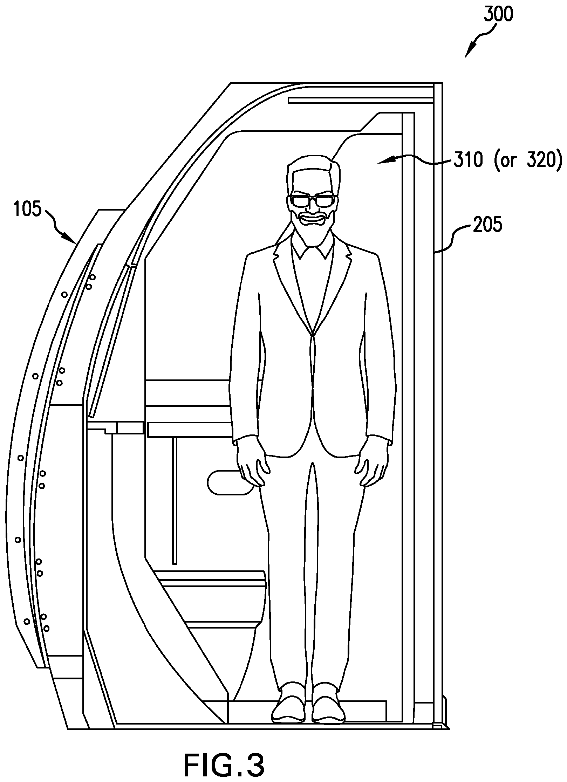

FIG. 3 illustrates a cross-sectional view of an exemplary lavatory monument. A lavatory monument 300 is surrounded by the outboard wall 105 on one side (left) and the door frame 205 on the other (right). The size of the first compartment 310 (or the second compartment 320) is such that it allows access to substantially only one typical adult-sized person. The limited space in a narrow body aircraft limits the dimensions of the first compartment 310 (or the second compartment 320). For example, the height H can be limited to about 75 inches (e.g., 6.25 feet) and a width W can be up to about 35 inches (e.g., approximately 3 feet).

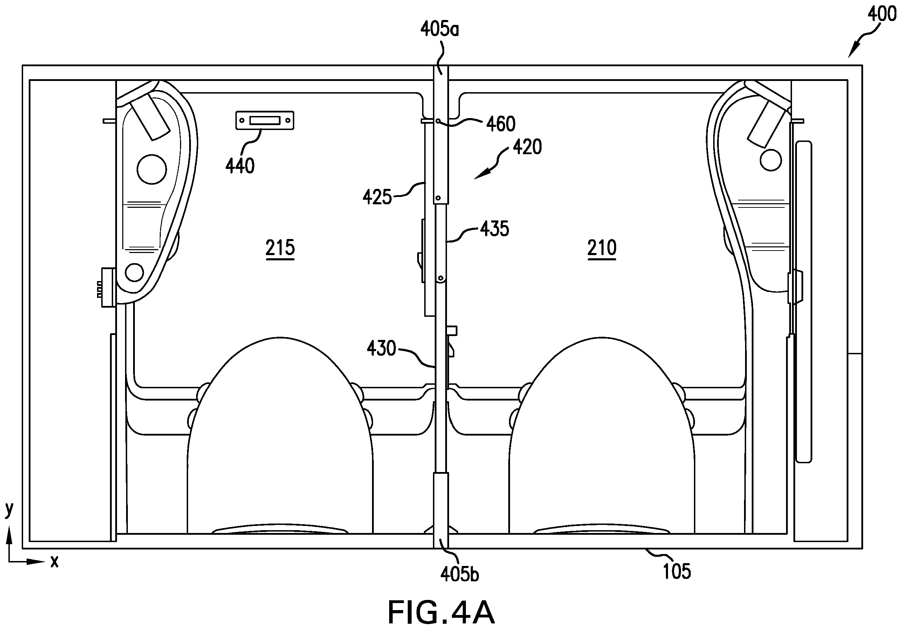

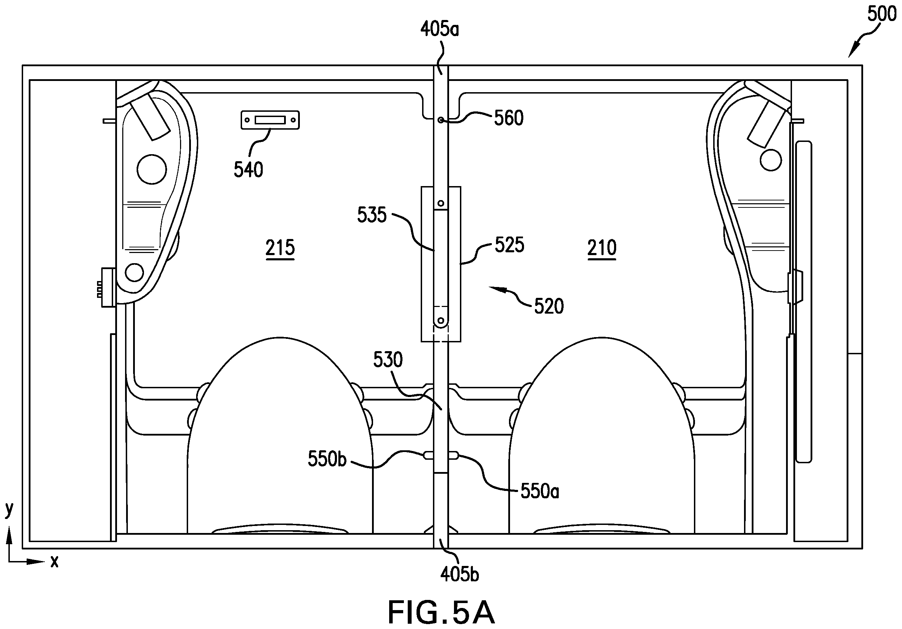

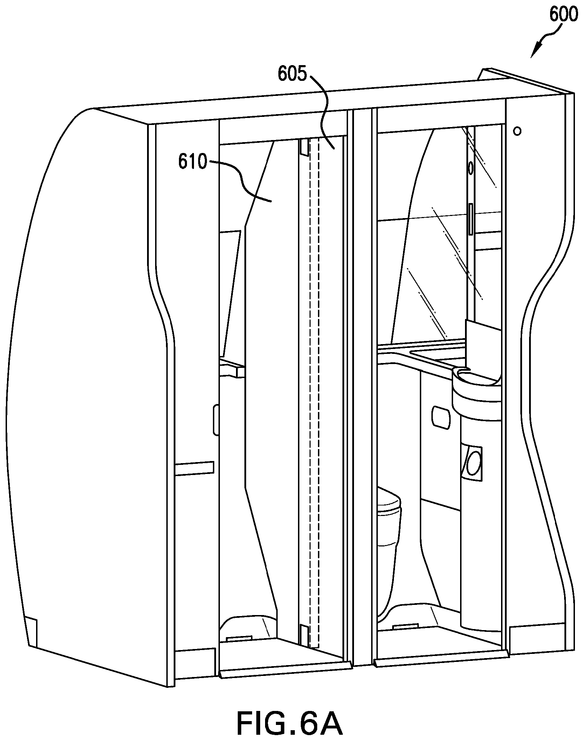

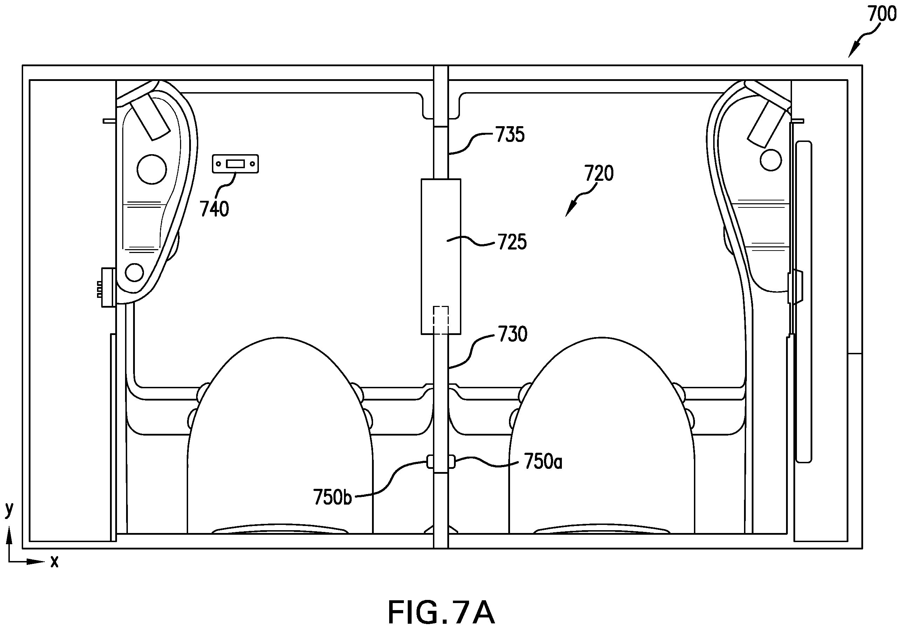

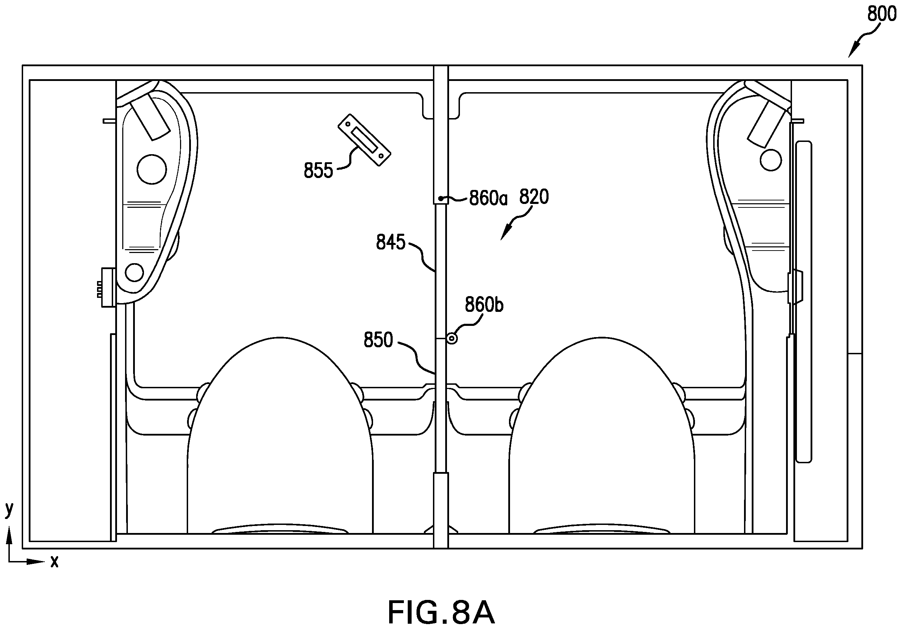

It can be appreciated by a person of ordinary skill in art that the movable wall 230 is not limited to the folding-type as discussed above. In other examples, the movable wall 230 can comprise an accordion-style expansion portion, telescoping panels, panels which otherwise slide relative to one another, or a combination thereof. For example, FIGs. 4A-4D illustrate use of a telescoping door, FIGs. 5A-5D and 6A-6B illustrate use of a sliding pocket-style door with and without a linkage arm, FIGS. 7A-7D illustrate use of a sliding pocket-style door with a flexible hinge, and FIGS. 8A-8D illustrate use of a type of folding door.

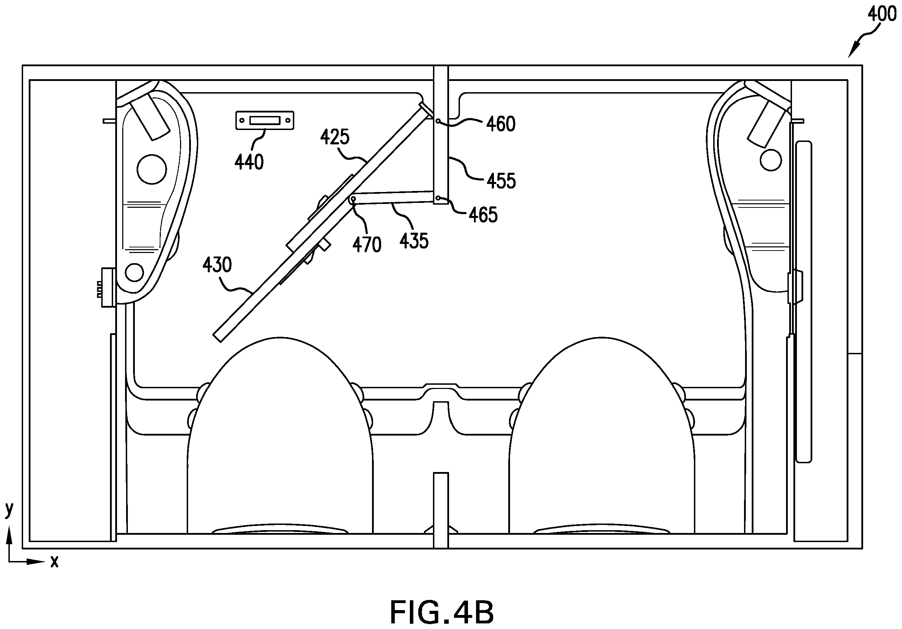

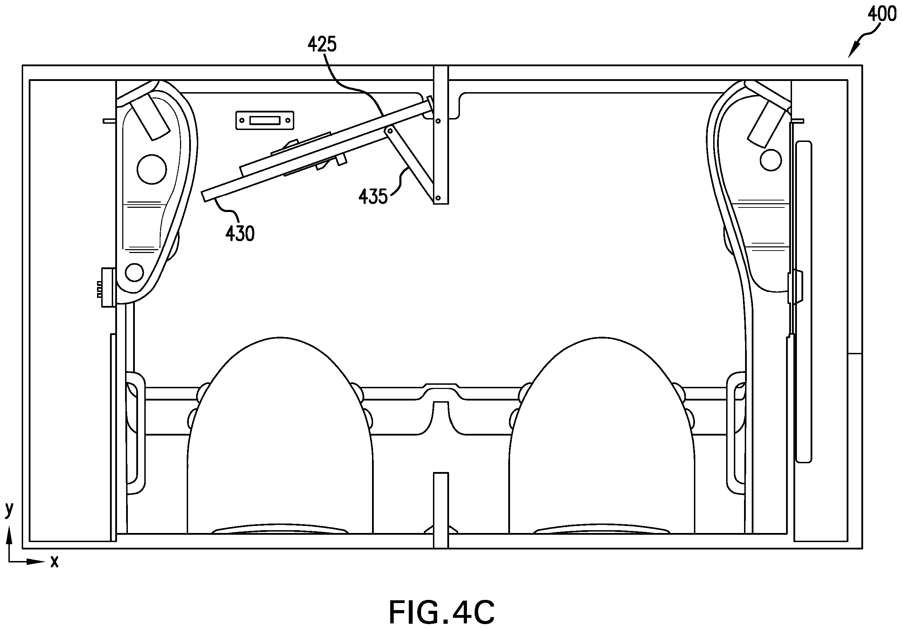

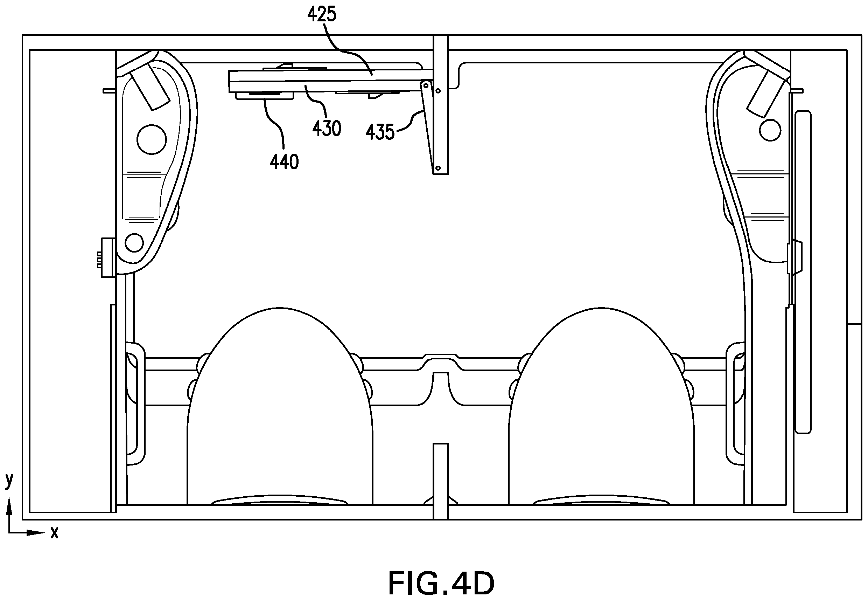

FIG. 4A illustrates a top view of a lavatory monument with an exemplary telescoping door in a closed (or first) position. FIG. 4B illustrates a top view of the lavatory monument of FIG. 4A with the telescoping door in an exemplary first partially open position. FIG. 4C illustrates a top view of the lavatory monument of FIG. 4A with the telescoping door in an exemplary second partially open position. FIG. 4D illustrates a top view of the lavatory monument of FIG. 4A with the telescoping door in an exemplary fully open position. An example telescoping door design may be found in U.S. Patent No. 9,440,727 entitled "Telescoping Aircraft Panel Door" and issued September 13, 2016.

Examples of mechanisms for implementing exemplary door mechanisms are described with reference, for example, to at least FIGs. 1-5 of U.S. Application Ser. No. 15/406,690.

As depicted in FIG. 4A, a lavatory monument 400 includes a rectangular frame supporting an inner frame segment 405a and an outer frame segment 405b aligned to approximately bisect the frame so as to define the first compartment 210 and the second compartment 215, which are substantially as described with reference to FIG. 2A. The first compartment 210 and the second compartment 215 are separated by a telescoping door 420. The telescoping door 420 includes a first panel 425 arranged in a parallel and offset slidable relationship with a second panel 430. In operation, the second panel 430 retracts in a telescoping relationship with the first panel 425 in cooperation with a linkage member 435.

As depicted in FIG. 4A, the telescoping door 420 is in a closed (or first) position. As will be described in further detail with reference to FIG. 4D, when the telescoping door 420 is reconfigured to an open or stowed position, at least one of the panels 425, 430 may be secured to a floor lock 440 located in the floor of the second compartment 215.

Referring to FIGS. 4A-4B, the first panel 425 is hingedly connected to a linkage bracket 455 (seen in FIG. 4B) via a hinge 460. The linkage bracket extends from the inner frame segment 405a. In operation, the second panel 430 rotates into the second compartment 215. The linkage member 435 is pivotally coupled at a proximal end to the linkage bracket 455 about a hinge 465, and is pivotally coupled at a distal end to the second panel 430 about a hinge 470. For example, the linkage arm 435 is hinged to the linkage bracket 455 via the hinge 465 so that it rotates in a clockwise direction into the second compartment 215. A major surface of the second panel 430 is slidably engaged or in proximate parallel relationship with a major surface of the first panel 425. As the linkage arm 435 rotates, the second panel 430 slides relative to the first panel 425 and the second panel 430 rotates with respect to the linkage bracket 455. FIGS. 4B and 4C show intermediate positions as the telescoping door 420 articulates from a closed position to an open position.

The linkage arm 435 can rotate more than 90° until the first panel 425 and the second panel 430 are stacked against each other, as shown in FIG. 4D. In the depicted embodiment, the telescoping door 420 does not include handles that may, for example, restrict the telescoping door 420 from moving to a fully stacked position. The first panel 425 and the second panel 430 are substantially parallel to the door (not shown) of the second compartment 215. In some embodiments, the second panel 430 can be locked in position to a lock slot 440. In one embodiment, only one lock slot 440 may be used, since the second panel 430 and the first panel 425 are stacked together. As such only one floor lock can be sufficient to hold the telescoping door 430 in position. Although illustrated as the floor lock 440, in other embodiments the panels 425, 430 may be secured using at least one ceiling mount locking mechanism, alone or in combination with at least one floor lock, such as the floor lock 440.

With reference to FIG. 4D, and according to some examples, the telescoping door 430 may advantageously permit access to both the sinks 220 and 225. Furthermore, the telescoping door 420 can allow access to both the toilets 235 and 240. Other examples of telescoping door arrangements which can be used in connection with the movable wall are disclosed in the U.S. Application No. 15/406,690, filed January 14, 2017, entitled "Telescoping Aircraft Panel Door," and assigned to B/E Aerospace.

In a further embodiment, rather than a telescoping door, the movable wall may be configured fold like a bi-fold door in which the two panels are hinged together along their common vertical edge and the inboard end of the inner panel and the outer end of the outer panel are pivotably and slidably engaged, respectively, with ceiling and floor tracks that are in the same plane as door 331. Such embodiments can advantageously include the flush-mounted retractable handles discussed above. One advantage of this configuration is that the lower portion 371 of the outboard partition 112a can be eliminated entirely because the outboard end of the panel 332 rides in channels in the ceiling and floor, thus obviating the need to "clear" the toilet 312.

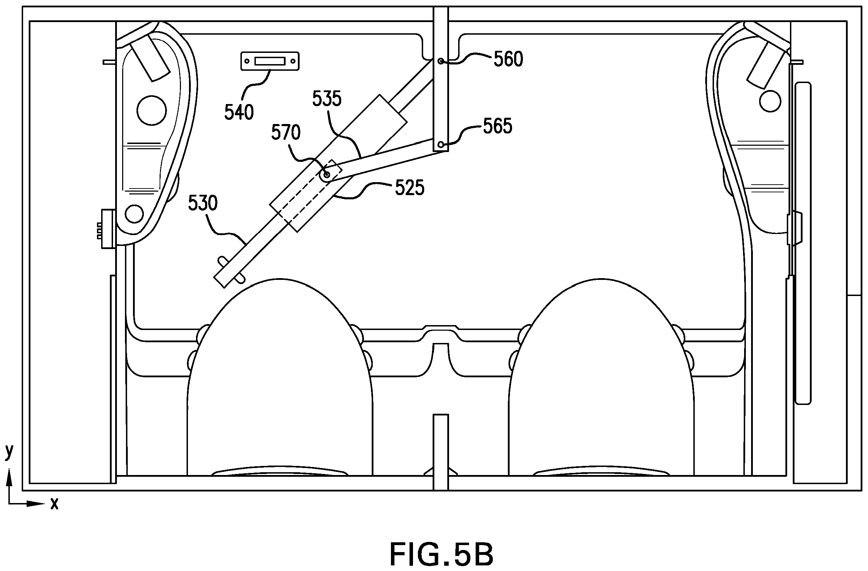

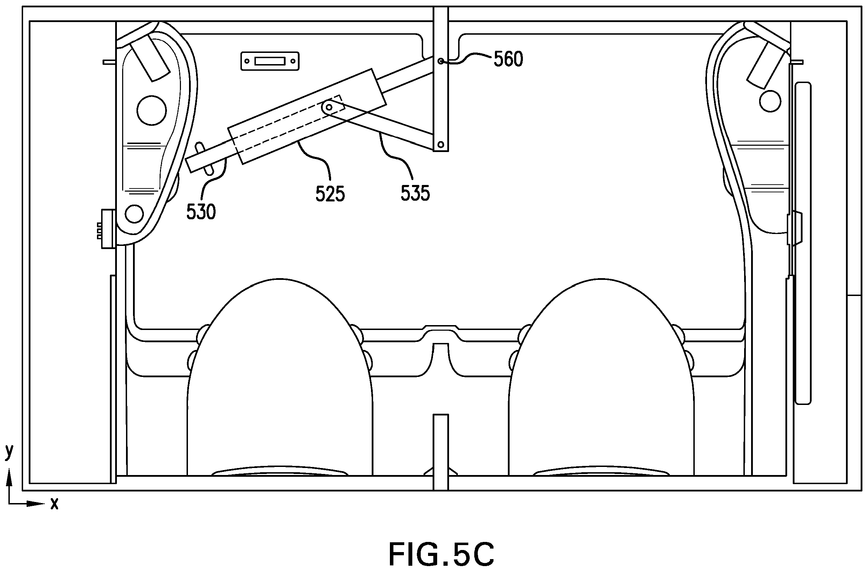

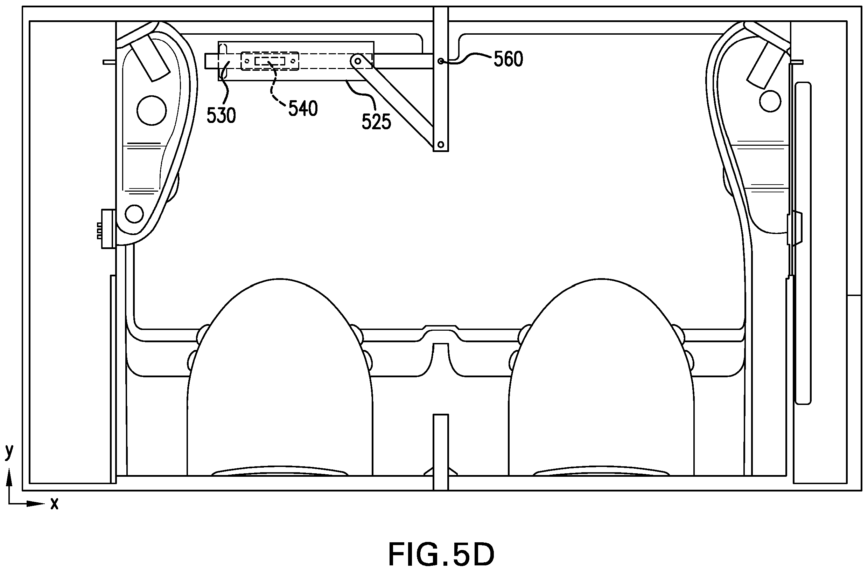

FIG. 5A illustrates a top view of a lavatory monument with an exemplary pocket sliding door in a closed position. FIG. 5B illustrates a top view of the lavatory monument of FIG. 5A with the pocket sliding door in an exemplary first partially open position. FIG. 5C illustrates a top view of the lavatory monument of FIG. 5A with the pocket sliding door in an exemplary second partially open position. FIG. 5D illustrates a top view of the lavatory monument of FIG. 5A with the pocket sliding door in an exemplary fully open position.

In the example illustrated in FIG. 5A, a lavatory monument 500 includes a rectangular frame supporting an inner frame segment 405a and an outer frame segment 405b aligned to approximately bisect the frame so as to define the first compartment 210 and the second compartment 215, which are substantially as described with reference, for example, to FIGs. 2A and 4A. The first compartment 210 and the second compartment 215 are separated by a sliding pocket door 520. The sliding pocket door 520 includes a first panel 525 arranged in a parallel pocket and slidable relationship with a second panel 530. In operation, the second panel 530 retracts into a pocket of the first panel 525 in cooperation with a linkage member 535.

As depicted in FIG. 5A, the sliding pocket door 520 is in a closed position. As will be described in further detail with reference to FIG. 5D, when the sliding pocket door 520 is reconfigured to an open or stowed position, at least one of the panels 525, 530 may be secured to a floor lock 540 located in the floor of the second compartment 215.

Mounted on the second panel 530 are a pair of opposing handles 550a, 550b that respectively extend into the compartments 210, 215. The handles 550a, 550b may help a crew member articulate the sliding pocket door 520 between the closed and open positions. In some embodiments, a corresponding cut-out (not shown) may be formed in the first panel 525 to receive the handles 550a, 550b when the second panel 520 is in the fully retracted position.

Referring to FIGs. 5A-5B, the first panel 525 is hingedly connected via a hinge 560 to a linkage bracket (e.g., such as the linkage bracket 455 of FIG. 4B) that extends from the inner frame segment 405a so that the second panel 530 rotates into the second compartment 215. The linkage member 535 is pivotally coupled at a proximal end to the linkage bracket about a hinge 565, and is pivotally coupled at a distal end to the second panel 530 about a hinge 570. For example, the linkage arm 535 is hinged to the linkage bracket via the hinge 565 so that it rotates in a clockwise direction into the second compartment 215. A major surface of the second panel 530 is slidably received in a pocket relationship with a major surface of the first panel 525. As the linkage arm 535 rotates, the second panel 530 slides relative to the first panel 525 and the second panel 530 rotates with respect to the linkage bracket. FIGS. 5B and 5C show intermediate positions as the sliding pocket door 520 articulates from a closed position to an open position.

As depicted in FIG. 5D, the linkage arm 535 can rotate more than 90° until the first panel 525 and the second panel 530 are in a substantially retracted pocket relationship. The first panel 525 and the second panel 530 are oriented substantially parallel to the door (not shown) of the second compartment 215. In some embodiments, the second panel 530 can be locked in position to a lock slot 540. In one embodiment, only one lock slot 540 may be used, since the second panel 530 and the first panel 525 would be securely positioned by locking the position of only one of the panels 525, 530. As such only one floor lock can be sufficient to hold the sliding pocket door 520 in position. Although illustrated as the floor lock 540, in other embodiments the panels 525, 530 may be secured using at least one ceiling mount locking mechanism, alone or in combination with at least one floor lock, such as the floor lock 540.

FIG. 6A is a perspective view of a lavatory monument with an exemplary full-length panel door. In the depicted figure, a lavatory monument 600 is in the first configuration (closed). The panels 605 and 610 form a divider with substantially the same or lower height than the first panel 605.

For example, the panels 605, 610 may be substantially equally sized to extend from the floor to the ceiling of the lavatory monument 600, with a small clearance to permit, for example, a bottom surface of the second panel 610 to slide on an upward facing track in the pocket formed in the first panel 605.

In some examples involving a pocket or telescoping door, a low friction plastic track may be used to reduce sliding friction between the panels 605, 610. In some embodiments, one or more wheels may be attached to a top or bottom surface of the second panel 610 to reduce sliding friction.

The first panel 605 is connected to a door frame between the first door and the second. For example, the first panel 605 may be hingedly connected to the door frame for pivoting movement as illustrated in FIG. 5B. The first panel 605 may, in some embodiments, also include a mirror oriented inward (e.g., towards the sink 220) of the compartment 210.

As depicted, the second panel 610 has a profiled shape in a vertical direction conforming to the shape of an outer frame segment (e.g., the outer frame segment 205b). The outer frame segment is a substantially non-flat in a vertical plane due to the curved shaped of the outboard wall 105 of the aircraft. Further, the outer frame segment may be curved to provide rigidity and load bearing (e.g., through greater connection to the floor of the lavatory monument) while being narrower at the height of a passenger's torso and shoulders to provide for increased maneuverability. That being said, the forward or rear walls of the partitions may incorporate the structures and features disclosed in U.S. Patent Nos. 9,440,742 and D764, 031, both of which are entitled Aircraft Interior Lavatory and assigned to B/E Aerospace, Inc. Either the fore or aft wall may alternatively or additionally incorporate the low profile flight attendant seat disclosed in U.S. Application Serial No. 62/431,041, entitled Components for Enhancement of a Low Profile Crew Attendant Seat.

In some embodiments, and with reference to FIG. 2A, the second panel 610 can include a first outboard lock accessible from the first compartment 210 and a second outboard lock accessible from the second compartment 215 to lock the second panel 610 to the outer frame segment 205b (see FIG. 2A). In general, the second panel 610 can be locked in an extended state to create a partition between the first compartment 210 and the second compartment 215. The outboard locks can connect with the outer frame segment 205b, in one example, by sliding in a direction toward the side wall of the aircraft (perpendicular to the longitudinal axis of the aircraft) and cooperating with a complementary mechanism located at position 360.

In one embodiment, the locks 336/338 may require a key or a combination accessible only to the flight attendants. In another example, the outboard locks or floor locks can connect with the outer frame segment 205b or floor, respectively, using an electrical locking mechanism such as, in some examples, an electromagnetic lock, electronic deadbolt, electronic latch, or electronic strike. The electrical locking mechanism may be configured for unlocking at the lavatory unit itself or remotely (e.g., from a control panel). For example, a control panel control may be configured, with or without corresponding password or passcode, to unlock the second panel 610 from the outer frame segment 205b. If the locking mechanism is an electrical locking mechanism, the lock may be configured to maintain position upon loss of electricity (e.g., the second panel 610 is unable to disconnect from the outer frame segment 205b). In one embodiment, the locks 336/338 (and the latches described below) may be configured to be released by a passenger or other person without special privileges.

The first panel 605 can also include a first floor lock, such as an articulating pin structure, that couples the first panel to the floor. Similarly, the second panel 610 can also include a second floor lock (not shown) that locks and/or unlocks the second panel 610 to the floor. The floor latches, for example, may be releasably secured to retain the first panel 605 and/or the second panel 610 in the first (e.g., divided compartment) configuration. The first floor lock and the second floor lock may be secured in place using a mechanical locking mechanism requiring a key or combination to prevent passengers from unlocking the partitions from the present position. In other embodiments, the floor locks may be secured using an electrical locking mechanism, for example through a lock actuated by a control panel used by aircraft staff members.

The outboard locks, the first floor lock, and the second floor lock, alone or in combination, may secure the movable wall and prevent the movable wall from opening when the aircraft experiences turbulence, or when a person or an object pushes against the movable wall, or in other situations where the door could otherwise accidentally open. The outboard locks, for example, can support loads against the movable wall, when in closed position. As such, the outboard locks, individually or in coordination, securely bolt the movable wall and maintain privacy within the respective compartments 210, 215.

Additionally, the outboard locks and floor locks may act to prevent a passenger from moving the panels 605, 610. The floor locks can be different from the outboard locks. For example, the floor locks may include mechanical locking mechanisms while the outboard locks may include electric locking mechanisms.

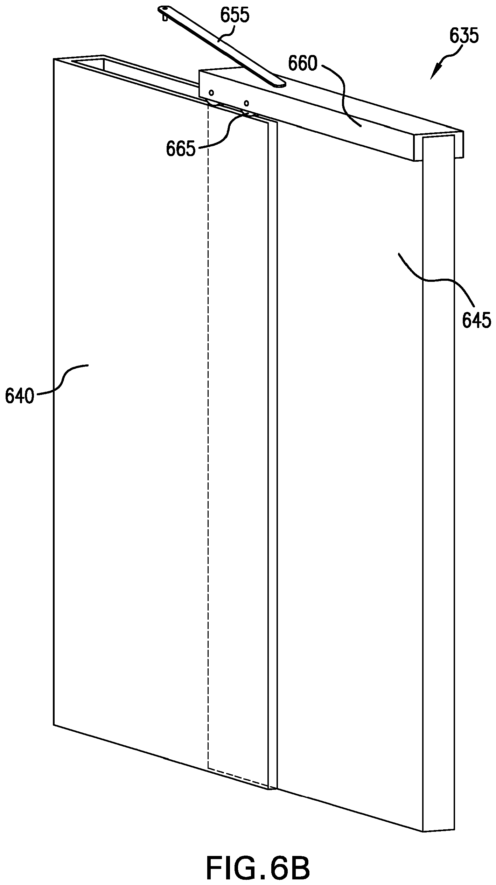

FIG. 6B is an isolated perspective view of an exemplary reduced-height pocket with a sliding door. In the depicted example, a pocket sliding door includes a first panel 640 is formed as a pocket that can slidably receive a second panel 645 in a lavatory monument in response to an articulating linkage member 655, which may operate substantially as described with reference to FIG. 5A-5D, for example. To reduce sliding friction between the panels 640, 645, the height of the first panel 640 is reduced to provide clearance for a panel top bracket 660. The panel top bracket 660 securely attaches to the top and opposing major surface faces of the second panel 645. In some embodiments, the top panel bracket 660 may be securely attached to the second panel 645 using fasteners (e.g., bolts, screws) inserted laterally into the second panel 645 such that the likelihood of tearing or weak connections can be substantially reduced or eliminated. The panel top bracket 660 further includes two pair of wheels 665 or bearings that provide low friction for the retracting and extending motions as the second panel 645 retracts and extends from the first panel 640. In some embodiments, one or more sets of wheels 665 may be attached to roll along a top surface of the first panel 605 to substantially reduce sliding friction, which may advantageously make the door easier to operate for the crew. Furthermore, the second panel can be made stronger and more secure in its full -height and in its C-channel secure mechanical connection to a strong (e.g., metal, carbon fiber, etc.) top panel bracket 660.

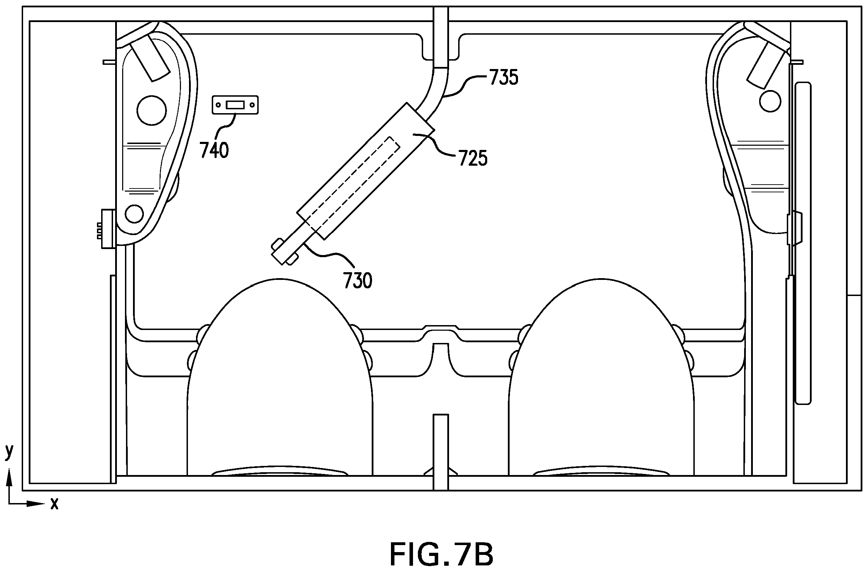

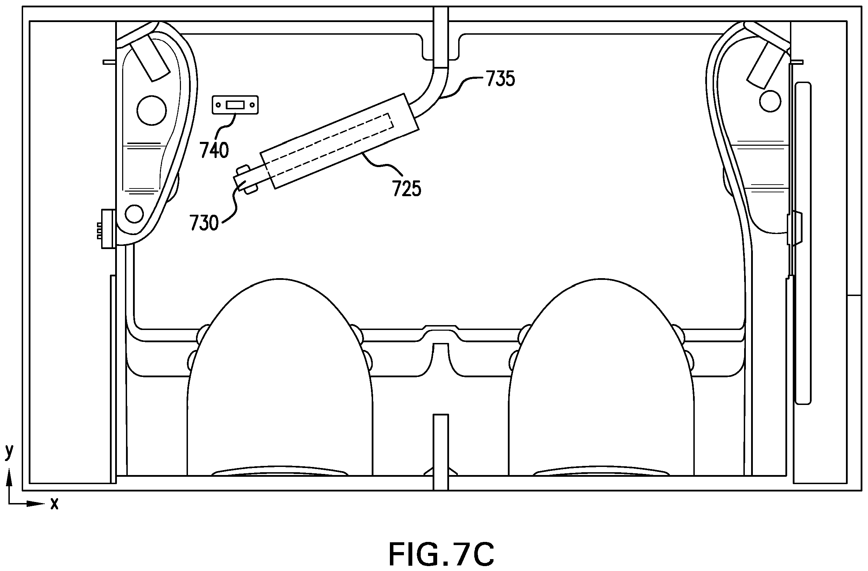

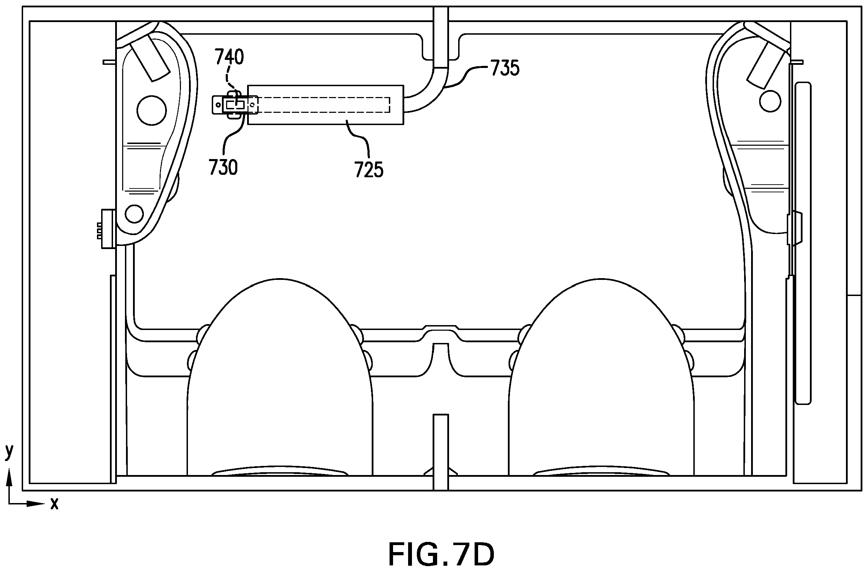

FIG. 7A illustrates a top view of a lavatory monument with an exemplary pocket sliding door in a closed position. FIG. 7B illustrates a top view of the lavatory monument of FIG. 7A with the pocket sliding door in an exemplary first partially open position about a flexible hinge. FIG. 7C illustrates a top view of the lavatory monument of FIG. 7A with the pocket sliding door in an exemplary second partially open position about a flexible hinge. FIG. 7D illustrates a top view of the lavatory monument of FIG. 7A with the pocket sliding door in an exemplary fully open position about a flexible hinge.

In the example illustrated in FIG. 7A, a lavatory monument 700 includes a rectangular frame defines the first compartment 210 (not labeled) and the second compartment 215 (not labeled), which are substantially as described with reference, for example, to FIGS. 2A and 4A. The first compartment 210 and the second compartment 215 are separated by a sliding pocket door 720. The sliding pocket door 720 includes a first panel 725 arranged in a parallel pocket and slidable relationship with a second panel 730. In operation, the second panel 730 retracts into a pocket of the first panel 725 in response to manual manipulation.

As depicted in FIG. 7A, the sliding pocket door 720 is in a closed position. As will be described in further detail with reference to FIG. 7D, when the sliding pocket door 720 is reconfigured to an open or stowed position, at least one of the panels 725, 730 may be secured to a floor lock 740 located in the floor of the second compartment 215.

Mounted on the second panel 730 are a pair of opposing handles 750a, 750b that respectively extend into the compartments 210, 215. The handles 750a, 750b may help a crew member articulate the sliding pocket door 720 between the closed and open positions. In some embodiments, a corresponding cut-out (not shown) may be formed in the first panel 725 to receive the handles 750a, 750b when the second panel 720 is in the fully retracted position.

Referring to FIGS. 7A-7B, the first panel 725 is hingedly connected via a flexible hinge 735 to the inner frame segment 405a (see FIG. 4A) so that the second panel 730 rotates into the second compartment 215. The flexible hinge 735 may be made of a bendable material such as rubber or plastic. A pliable material, such as rubber, may substantially dampen vibration, for example, to mitigate rattling or audible vibration conduction into the panels 725, 730, for example. A major surface of the second panel 730 is slidably received in a pocket relationship with a major surface of the first panel 725. As the crew member pulls on at least one of the handles 750a, 750b, the second panel 730 slides relative to the first panel 725 and the second panel 530 rotates with respect to the linkage bracket. FIGS. 7B and 7C show intermediate positions as the sliding pocket door 720 articulates from a closed position to an open position.

As depicted in FIG. 7D, the flexible hinge 735 can flex at least about 90° until the first panel 725 and the second panel 730 are oriented substantially parallel to the door (not shown) of the second compartment 215 and in a substantially retracted pocket relationship. In some embodiments, the second panel 730 can be locked in position to a lock slot 740. In one embodiment, only one lock slot 740 may be used, since the second panel 730 and the first panel 725 would be securely positioned by locking the position of only one of the panels 725, 730. As such only one floor lock can be sufficient to hold the sliding pocket door 720 in position. Although illustrated as the floor lock 740, in other embodiments the panels 725, 730 may be secured using at least one ceiling mount locking mechanism, alone or in combination with at least one floor lock, such as the floor lock 740.

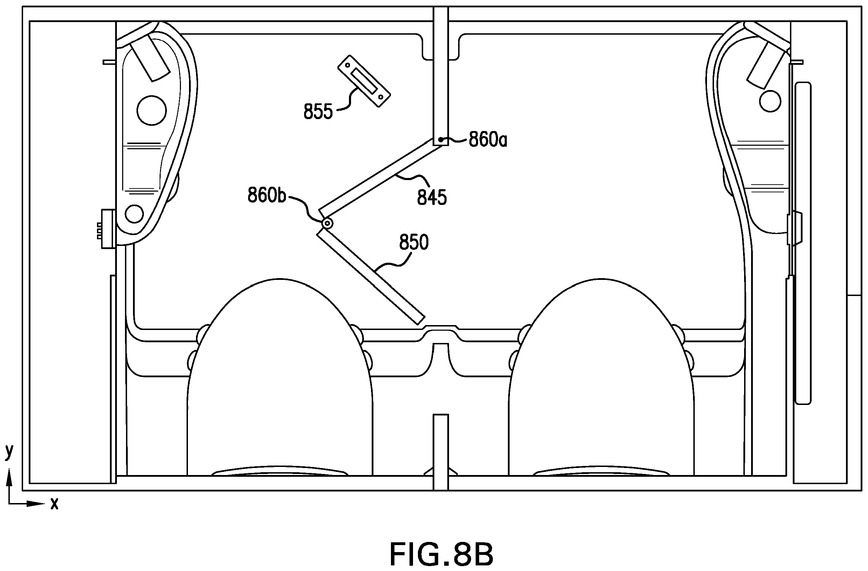

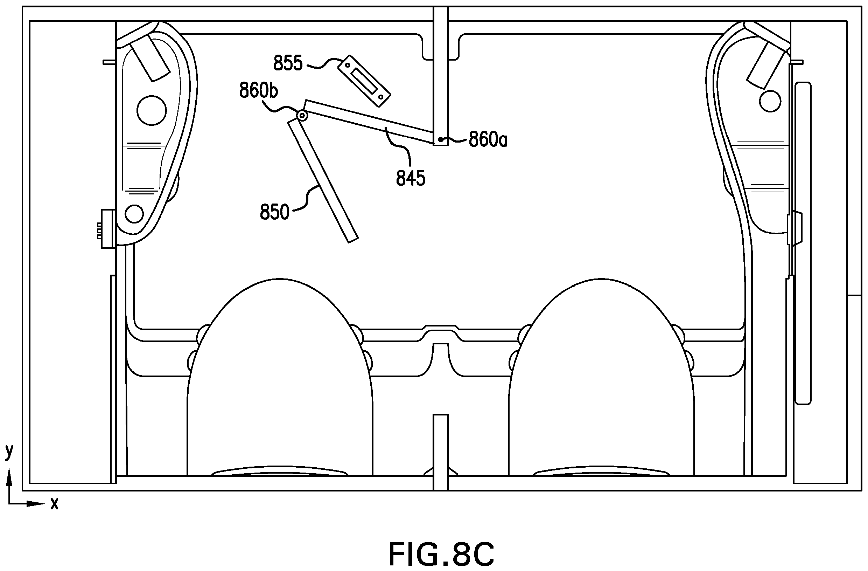

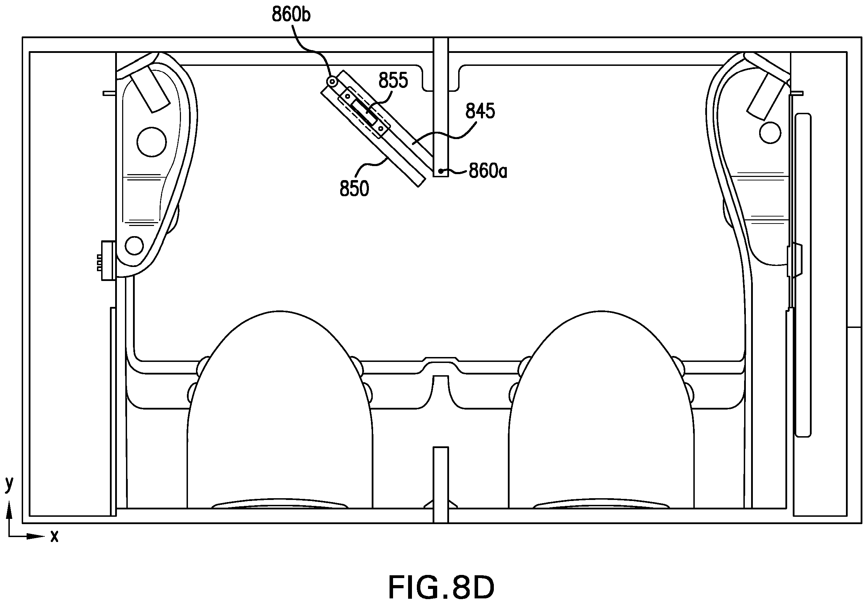

FIG. 8A illustrates a top view of a lavatory monument with an exemplary folding door with no handles in a closed position. FIG. 8B illustrates a top view of the lavatory monument of FIG. 8A with the folding door with no handles in a first exemplary partially open position. FIG. 8C illustrates a top view of the lavatory monument of FIG. 8A with the folding door with no handles in a second exemplary partially open position. FIG. 8D illustrates a top view of the lavatory monument of FIG. 8A with the folding door with no handles in an exemplary fully open position.

As depicted in FIG. 8A, and with reference to FIG. 4A, a lavatory monument 800 includes a rectangular frame supporting the inner frame segment 405a and the outer frame segment 405b aligned to approximately bisect the frame so as to define the first compartment 210 and the second compartment 215, which are substantially as described with reference to FIG. 2A. The first compartment 210 and the second compartment 215 are separated by a folding door 820. The folding door 820 includes a first panel 845 arranged in a coplanar (while in the fully extended state) and hinged relationship with a second panel 850. In operation, the second panel 850 folds in a hinged relationship with the first panel 845 in response to a user or crew member simply pushing on a major surface of the panels 845, 850 while standing in the first compartment 210.

As depicted in FIG. 8A, the folding door 820 is in a closed position. As will be described in further detail with reference to FIG. 8D, when the folding door 820 is reconfigured to an open or stowed position, at least one of the panels 845, 850 may be secured to a lock slot 855 located in the floor of the second compartment 215.

Referring to FIGS. 8A-8B, the first panel 845 is hingedly connected to a linkage bracket 455 (seen in FIG. 4B) via a hinge 860a. The linkage bracket extends from the inner frame segment 405a. In operation, the second panel 850 rotates into the second compartment 215 as it folds into the first panel 845 about a hinge 860b. A major surface of the second panel 850 rotates about the hinge 860b until it engages or comes into an approximate parallel relationship with a major surface of the first panel 845. FIGS. 8B and 8C show intermediate positions as the folding door 820 articulates from a closed position to an open position.

The first panel 845 can rotate more than 90° until the first panel 845 and the second panel 850 are stacked against each other, as shown in FIG. 8D. In the depicted embodiment, the folding door 820 does not include handles that may, for example, restrict the folding door 820 from folding to a fully closed position. The panels 845, 850 are substantially parallel to each other, but may be at a substantial angle to the door (not shown) of the second compartment 215. In some embodiments, the second panel 850 can be locked in position to a lock slot 855. In one embodiment, only one lock slot 855 may be used, since the second panel 850 and the first panel 845 are stacked together. As such only one floor lock may be sufficient to hold the folding door 820 in position. Although illustrated as the lock slot 855, in other embodiments the panels 845, 850 may be secured using at least one ceiling mount locking mechanism, alone or in combination with at least one floor lock, such as the lock slot 855.

In some embodiments, the first panel 845 may be hingedly connected to the inner frame segment 205a via the hinge 860a, while the second panel 850 is locked to the outer frame segment 205b. The panels 845 and 850 may also be locked to the floor.

In some embodiments, the second panel 850 can be unlocked from the outer frame segment 205b and the floor of the second compartment 215. The first panel 845 can be unlocked from the floor of the second compartment 215. Once unlocked, the first panel 845 and the second panel 850 can move simultaneously. The first panel 845 or the second panel 850 can be pushed from the first compartment 210 (or pulled from the second compartment 215, such as with a strap) causing the first panel 845 to rotate about the first hinge 860a inside the second compartment 215. Simultaneously, the second panel 850 rotates about the second hinge 860b causing the second panel 850 to move into the second compartment 215. Prior to folding about the hinge 860b, the second panel 850 may be blocked by the second toilet 235. As such, the second panel 850 folds to clear around the second toilet 235, as the first panel 845 moves towards the lock slot 855. FIGS. 8B and 8C show intermediate positions as the folding door 820 rotates about the hinges 860a, 860b.

In FIG. 8D, the first panel 845 may be rotated around the hinge 860a by an angle greater than 90° and locked in the lock slot 855. Similarly, the second panel 850 is rotated and may be locked in the lock slot 855. Unlike FIG. 2C and 2D, the second panel 850 does not block access to the second sink 225. In this open orientation, the sinks 220 and 225 and the toilets 235 and 240 are all accessible.

In some embodiments, a second lock slot may be positioned closer to the sink 225 in order to provide, for example, extra privacy in the event of an inadvertent opening of the door to the compartment 215, as described above with reference to FIG. 2C, for example. In such embodiments, the first panel 845 may optionally be secured to the lock slot 855, and the second panel 850 would be secured to the lock slot closer to the sink 225. As such, the panels 845, 850 would not be stacked or folded in parallel. Rather, the angle between the panels could be, by way of example and not limitation, between about 30 degrees and about 180 degrees, such as between about 45 degrees and 135 degrees, or about 90 degrees, for example.

Although various embodiments have been described with reference to the figures, other examples are possible. For example, two lavatory compartments may be converted into a larger compartment for use by a passenger of reduced mobility.

In some embodiments, a cabin attendant may unlock a movable wall such as the movable wall 300 or telescoping door 420 from its first lavatory compartment segmenting position by unlocking the movable wall from the outboard wall of the lavatory monument. The movable wall, for example, may be locked to the outboard wall itself or an outboard partition section thereof, such as the outboard partition 205b illustrated in FIG. 2B. The lock may be accessible from either or both of the two lavatory compartments. Alternatively, the cabin attendant may need to access both the first lavatory compartment and the second lavatory compartment, consecutively, to unlock two locking mechanisms. In a further implementation, an electronic locking mechanism may be released remotely, for example through a control panel located outside the lavatory monument (e.g., mounted to an exterior of the lavatory monument or accessible within a cabin attendant region such as a galley region).

The cabin attendant may, in some embodiments, unlock the movable wall from one or more floor and/or ceiling mount mechanisms. For example, the movable wall may include a first floor lock and a second floor lock designed to communicate with floor-mounted locking mechanisms within the lavatory monument. The floor and/or ceiling mount mechanisms may be different locking mechanisms than the outboard locking mechanism. For example, the floor mounted locking mechanisms may be physically keyed to the floor of the lavatory monument, while the outboard partition locking mechanism may be electrically keyed to the movable wall. The cabin attendant may need to enter one or both of the lavatory compartments to release the floor and/or ceiling locking mechanisms. Alternatively, the cabin attendant may electrically release the floor and/or ceiling locking mechanisms remotely via a control panel.

In other embodiments, the locks are latches that may be released without the use of any key, special tool, or other access control. Such embodiments have the advantage that the flight attendants need not locate any key, tool or control panel prior to converting the dual lavatory complex into a PRM lavatory. Moreover, in some embodiments passengers may accomplish this independently, without the aid of a flight attendant.

In some embodiments, upon releasing the outboard locking mechanism as well as all floor and/or ceiling locking mechanisms, the cabin attendant rotates the movable wall around a hinge mounted between the two doors of the lavatory monument. The hinge, for example, may be mounted to the door frame (e.g., 205 of FIG. 3) or to a projecting segment of the door frame, such as 205a of the lavatory monument 200 of FIG. 2A, for example.

While rotating the movable wall around the hinge, in some embodiments, the cabin attendant may move a first panel of the movable wall towards a second panel of the movable wall. The two panels, for example, may sweep through angles between 90 degrees and 135 degrees while clearing a toilet within the compartment where the movable wall will be mounted in its stowed configuration. For example, as illustrated in FIG. 2C, the panel may be designed to fold to at least a 90-degree angle for stowage. In another example, the panels of the movable panel may be slid or folded against each other. For example, as illustrated in FIGS. 4B-4D, the panels 425, 430 are slid into a position where opposite-facing surfaces of the panels may be folded to be proximate each other (in their folded and retracted state).

In some implementations, the cabin attendant positions at least a portion of the movable wall proximate a door of one of the lavatory compartments. For example, as illustrated in FIG. 2C, the movable wall may at least partially block the door of the unused lavatory compartment.

In some implementations, the cabin attendant, at this point, may lock the movable wall into its stowed position. The cabin attendant, for example, may lock at least a first panel of the movable wall to a first floor mount locking mechanism, as described in relation to FIGS. 2C, 4D, 5D, 7D and 8D. Further, the cabin attendant may lock a second panel of the movable wall to a second floor mount locking mechanism, as discussed in relation to FIG. 2C. In some examples, the cabin attendant may lock at least a first panel of the movable wall to a ceiling mount locking mechanism, either in addition to or instead of to the floor mount locking mechanism. Additionally, the cabin attendant may lock the partially blocked lavatory compartment door, for example to increase privacy of the passenger with reduced mobility. The door lock may be accessible from the interior or exterior of the lavatory compartment.

In some implementations, a passenger of reduced mobility enters the lavatory monument through the unblocked door. The passenger may have a wheelchair and/or a personal attendant. The wheelchair, for example, may be stowed between the two toilets. Further, the personal attendant may rest on the second toilet while the passenger with reduced mobility uses the facilities. The unblocked door of the lavatory monument may be locked by the passenger or personal attendant for privacy.

After the passenger with reduced mobility uses the facilities, in some implementations, the cabin attendant re-enters the lavatory compartment to reposition the movable wall in the first, segmenting position. For example, the cabin attendant may unlock the ceiling and/or floor locking mechanism(s), rotate the movable wall around the door frame hinge to a position perpendicular to the aircraft aisle, and extend the at least two panels of the movable wall such that the movable wall extends between the door frame and the outboard wall of the lavatory monument (or outboard partition thereof). At this point, the cabin attendant would lock the movable wall into its compartment segmenting position.

In some embodiments, a lavatory monument (100, 200, 300, 400, 500, 600, 700, or 800) according to the present disclosure may present a number of advantages. The movable wall 230 may be articulated to move inside the first compartment 210 or the second compartment 215, and not outside the compartments 210 and 220. Such an inward articulation may provide advantages. For example, the lavatory monument can be retrofitted with the movable wall 230 without changing the existing configuration of the lavatory. The location of sinks 220 and 225 need not change; as such, there is no need to change the plumbing system. Furthermore, the location of the toilets 235 and 240, and the corresponding sewage system need not be change. As the movable wall 230 is articulated inside the lavatory monument (100, 200, 300, 400, 500, 600, 700, or 800), the outside space, particularly an aisle passage in the aircraft may not be blocked. Also, the seating arrangement of the aircraft can be used optimally or no changes may be needed to the existing arrangement.

According to an embodiment of the present disclosure, there is provided a lavatory monument for an aircraft including a first compartment including a first toilet, a first sink, and a first space around the first toilet and the first sink, a second compartment including a second toilet, a second sink, and a second space around the second toilet and the second sink, and a movable wall including a first panel connected to a second panel separating the first component and the second component. The first panel and the second panel of the movable wall are articulated to rotate and lock in the first compartment creating a third space that is a combination of the first space and the second space rendering the third space greater than the first space and the second space.

Further, according to an embodiment of the present disclosure, there is provided a method of retrofitting an aircraft with a lavatory monument to provide access and extra space to a person with reduced mobility and an assistant allowing the PRM and the assistant to occupy the lavatory simultaneously. The method includes installing the lavatory monument including a first compartment including a first toilet, a first sink, and a first space around the first toilet and the first sink, a second compartment including a second toilet, a second sink, and a second space around the second toilet and the second sink, and a movable wall including a first panel connected to a second panel separating the first compartment and the second compartment. The first panel and the second panel of the movable wall are articulated to rotate and lock in the first compartment creating a third space that is a combination of the first space and the second space rendering the third space greater than the first space and the second space.

In various implementations, when the movable wall is opened (also referred as the second configuration), the first compartment and the second compartment can be accessed simultaneously. In an illustrative example, the movable wall includes a first panel and a second panel connected between an outboard partition and at a middle of a frame of the lavatory monument. The first panel is hinged to the frame of the lavatory monument via a first hinge and to the second panel via a second hinge. The movable wall is articulated to rotate in a clockwise direction about the first hinge inside the first compartment or in a counter clockwise direction inside in the second compartment. The second panel of the movable wall is separated from the outboard partition and articulated to rotate about the second hinge.

Opening the movable wall creates a third space, which is a combination of the second space (in FIG. 2A) and a part of the first space (in FIG. 2A). As such, the third space 265 is substantially larger than the first space or the second space. The third space 265 allows access of the lavatory monument 200 to at least two people with substantial room to move for both the persons, unlike when the movable wall 230 is closed, as discussed with respect to FIG. 2A.

The second panel 232 is preferably fixed in the second position by a single magnet or a pair of cooperating magnets installed at position 240 on the panel 232 and/or the sink 214 (including the underlying cabinet). The use of magnets has the advantage that the passenger or flight attendant need not manipulate latches or other mechanisms to hold the panel 232 in place. This also permits the panel 232 to be easily returned to first position. Alternatively, the door may be received by a stop flange installed on the ceiling. The stop flange may be equipped with a magnet or spring biased detent mechanism(s) to hold the door in place. Consistent with the principle that the lavatories 210 and 220 are intended, in preferred embodiments, to be mirror images of one another, the second lavatory 220 may be similarly equipped to receive and retain the panel 232. In this alternative, the person with reduced mobility will enter through door 211 rather than door 221.

In various examples, overhead locks (similar to the floor locks 255a, 255b, 440, 540, 740, 855) can be provided at a top end of the panels 245 and 250 and the corresponding lock receiving mechanisms can be provided in an overhead cabin structure for securing/locking the panels 245 and 250 into a desired position. In certain situations, overhead locks may be preferred, as the use of overhead locks can be easier to maintain, clean, accumulates less dust or garbage, etc.; hence, can be more sanitary compared to floor locks or lock slots in the floor (e.g., 255a, 255b, 440, 540, 740, 855). Further still, a door stop in the form of a flange extending downwardly from the ceiling may receive and retain the door, as with one or a pair of magnets.

In an example, a lavatory monument may be in the first configuration (closed). The panels 245 and 250 of the movable wall 230 are fully extended and in the locked state. The first panel 245 may be supported by the frame. The compartments 210, 215 can be accessed independently through their respective doors.

In various embodiments, mounting fixtures 361 at the top of the lavatory monument may be used for mounting the lavatory monument to a ceiling structure of the aircraft cabin. The mounting fixtures, for example, may be designed and positioned to connect with preexisting corresponding mounting mechanisms in the ceiling structure of the aircraft cabin. For example, the mounting fixtures may be designed to mate with the mounting mechanisms used by a previously installed non-PRM outboard dual-stall lavatory monument.

Further, the plumbing connections of the lavatory monument may be designed to integrate with plumbing interconnects available for connecting conventional lavatories in the same space. In this manner, the lavatory monument may be designed for retrofitting into a space previously used by a prior art lavatory monument.

In other embodiments, the outer frame segment 205b may be flat in vertical direction and not be profiled shape, as shown. Furthermore, the outer frame segment 205b may be wide enough to attach a handle (similar to handles 750a, 750b) on either side of the outer frame segment 205b (e.g., facing the toilets in compartments 110, 115). For example, a handrail or bar may be connected to the outer frame segment 205b in lieu of or in addition to the handles 750a, 750b, for use as a support structure by a passenger with reduced mobility when using the toilet while the movable wall 230 is in the open position.

In further embodiments, the middle portion of the outer frame segment 205b is eliminated and the second panel 250 extends all the way to the outboard wall of the lavatory monument. In some embodiments it may be preferable to keep the lower portion 371 of the outer frame segment 205b so that the panel 250 can more easily clear the toilets when the movable wall is being articulated between the first and second positions. In certain of the embodiments described hereinafter, it may be preferred to eliminate outboard partition completely, in which case the second panel (e.g., the panel 250) will extend to the outboard wall along its full vertical height.

In the foregoing description, the term "lock" is intended to include latches, pins, bolts or similar mechanisms that can be manually opened by a passenger without any key, special tool or other access privileges or techniques.

While certain embodiments have been described, these embodiments have been presented by way of example only, and are not intended to limit the scope of the present disclosures. Indeed, the novel methods, apparatuses and systems described herein can be embodied in a variety of other forms.

## Claims

1. An aircraft lavatory monument, comprising:
a first compartment (210) including a first toilet (240), a first sink (220), and a first door providing access to the first compartment (210) from an aisle of the aircraft;
a second compartment (215) proximate the first compartment (210), the second compartment (215) including a second toilet (235), a second sink (225), and a second door providing access to the second compartment (215) from the aisle of the aircraft, wherein
the second door is aligned in a first vertical plane with the first door,
the second toilet (235) is aligned with the first toilet (240) at a lateral position spaced apart from the first vertical plane; and
a movable wall (230) comprising a first panel and a second panel, the movable wall disposed between the first compartment (210) and the second compartment (215), the movable wall (230) including
a first panel (245) hingedly or slidably connected to a second panel (250),
a means for releasably securing the first panel (245) into a first position separating the first compartment (210) and the second compartment (215) and providing privacy therebetween,
a means for pivoting the movable wall (230) about a fixed axis into the second compartment (215), thereby allowing the first compartment (210) and second compartment (215) to jointly form an enlarged bathroom space (265) configured for use by persons with reduced mobility, wherein the means for pivoting comprises a hinge mechanism connecting the first panel (245) opposite the toilets between the first door and the second door and a means for releasably securing at least one of the first panel (245) and the second panel (250) within and with respect to the second compartment (215).

2. The aircraft lavatory monument of claim 1, wherein the first panel (245) and the second panel (250) of the movable wall (230) are configured to pivot into the second compartment (215) such that the second panel (250) is disposed substantially parallel to the first door.

3. The aircraft lavatory monument of claim 1, wherein the first panel (245) and the second panel (250) of the movable wall (230) are configured to pivot into the second compartment (215) such that the first panel (245) is substantially perpendicular to the first door.

4. The aircraft lavatory monument of claim 1, wherein the means for releasably securing comprises a first locking mechanism accessible from the first compartment (210) and a second locking mechanism accessible from the second compartment (215).

5. The aircraft lavatory monument of claim 1, wherein the means for releasably securing at least one of the first panel (245) and the second panel (250) comprises at least one floor lock.

6. A method of retrofitting an aircraft with a lavatory monument to provide access and extra space to a person with reduced mobility and an assistant allowing the person with reduced mobility and the assistant to occupy the lavatory monument simultaneously, the method comprising:
installing, in a region previously occupied by a conventional aircraft lavatory monument including two side-by-side lavatory compartments, a lavatory monument for persons with reduced mobility, the lavatory monument comprising
a first compartment (210) including a first toilet (240), a first sink (220), and a first door providing access to the first compartment (210) from an aisle of the aircraft,
a second compartment (215) proximate the first compartment (210), the second compartment (215) including a second toilet (235), a second sink (225), and a second door providing access to the second compartment (215) from the aisle of the aircraft, wherein
the second door is aligned in a first vertical plane with the first door,
the second toilet (235) is aligned with the first toilet (240) at a lateral position spaced apart from the first vertical plane, and
a movable wall (230) comprising a first panel and a second panel, the movable wall disposed between the first compartment (210) and the second compartment (215), the movable wall (230) including
a means for pivoting the movable wall (230) about a fixed axis into the second compartment (215), wherein the means for pivoting further comprises a hinge mechanism connecting the first panel (245) opposite the toilets between the first door and the second door, and
a first panel (245) hingedly or slidably connected to a second panel (250), wherein
the movable wall (230) is configured to move between and releasably lock into position at a first position separating the first compartment (210) and the second compartment (215) and providing privacy therebetween, and a second position within the second compartment wherein the movable wall (230) is in a collapsed or folded condition and the first compartment (210) and second compartment (215) jointly form an enlarged bathroom space (265) configured for use by persons with reduced mobility;
releasing the first panel (245) from its mounting position between the first toilet (240) and the second toilet (235); and
rotating the first panel (245) and the second panel (250) into the second compartment (215) to form the enlarged bathroom.

7. The method of claim 6, wherein releasing the first panel (245) from its mounting position comprises releasing an outboard lock of the first panel (245) from an outboard partition disposed between the first toilet (240) and the second toilet (235).

8. The method of claim 6, further comprising, prior to rotating the first panel (245) and the second panel (250), releasing at least one floor lock in at least one corresponding floor aperture.

## Patentansprüche

1. Flugzeugtoilettenmodul, umfassend:
ein erstes Abteil (210) mit einer ersten Toilette (240), einem ersten Waschbecken (220) und einer ersten Tür, die den Zugang zu dem ersten Abteil (210) von einem Gang des Flugzeugs aus ermöglicht;
ein zweites Abteil (215) in der Nähe des ersten Abteils (210), wobei das zweite Abteil (215) eine zweite Toilette (235), ein zweites Waschbecken (225) und eine zweite Tür aufweist, die den Zugang zu dem zweiten Abteil (215) vom Gang des Flugzeugs aus ermöglicht, wobei
die zweite Tür in einer ersten vertikalen Ebene mit der ersten Tür fluchtet,
die zweite Toilette (235) mit der ersten Toilette (240) in einer seitlichen Position fluchtet, die von der ersten vertikalen Ebene beabstandet ist; und
eine bewegliche Wand (230), die eine erste Platte und eine zweite Platte umfasst, wobei die bewegliche Wand zwischen dem ersten Abteil (210) und dem zweiten Abteil (215) angeordnet ist, wobei die bewegliche Wand (230) umfasst:
eine erste Platte (245), die gelenkig oder verschiebbar mit einer zweiten Platte (250) verbunden ist,
ein Mittel zum lösbaren Befestigen der ersten Platte (245) in einer ersten Position, die das erste Abteil (210) und das zweite Abteil (215) trennt und für Privatsphäre dazwischen sorgt,
ein Mittel zum Schwenken der beweglichen Wand (230) um eine feste Achse in das zweite Abteil (215), wodurch es dem ersten Abteil (210) und dem zweiten Abteil (215) ermöglicht wird, gemeinsam einen für die Benutzung durch Personen mit eingeschränkter Mobilität konfigurierten vergrößerten Sanitärraum (265) zu bilden, wobei das Mittel zum Schwenken einen Scharniermechanismus, der die erste Platte (245) gegenüber den Toiletten zwischen der ersten Tür und der zweiten Tür anschließt, und ein Mittel zum lösbaren Befestigen der ersten Platte (245) und/oder der zweiten Platte (250) innerhalb des und in Bezug auf das zweite Abteil (215) umfasst.

2. Flugzeugtoilettenmodul nach Anspruch 1, bei dem die erste Platte (245) und die zweite Platte (250) der beweglichen Wand (230) konfiguriert sind, so in das zweite Abteil (215) zu schwenken, dass die zweite Platte (250) im Wesentlichen parallel zu der ersten Tür angeordnet ist.

3. Flugzeugtoilettenmodul nach Anspruch 1, bei dem die erste Platte (245) und die zweite Platte (250) der beweglichen Wand (230) konfiguriert sind, so in das zweite Abteil (215) zu schwenken, dass die erste Platte (245) im Wesentlichen senkrecht zur ersten Tür ist.

4. Flugzeugtoilettenmodul nach Anspruch 1, bei dem das Mittel zum lösbaren Befestigen einen ersten Verriegelungsmechanismus, der von dem ersten Abteil (210) zugänglich ist, und einen zweiten Verriegelungsmechanismus umfasst, der von dem zweiten Abteil (215) zugänglich ist.

5. Flugzeugtoilettenmodul nach Anspruch 1, bei dem das Mittel zum lösbaren Befestigen der ersten Platte (245) und/oder der zweiten Platte (250) mindestens ein Bodenschloss umfasst.

6. Verfahren zum Nachrüsten eines Flugzeugs mit einem Toilettenmodul, um einer Person mit eingeschränkter Mobilität und einer Hilfsperson Zugang und zusätzlichen Raum zu verschaffen, so dass die Person mit eingeschränkter Mobilität und die Hilfsperson das Toilettenmodul gleichzeitig benutzen können, wobei das Verfahren umfasst:
Installieren eines Toilettenmoduls für Personen mit eingeschränkter Mobilität in einem Bereich, der zuvor von einem herkömmlichen Flugzeugtoilettenmodul mit zwei nebeneinander liegenden Toilettenabteilen belegt war, wobei das Toilettenmodul
ein erstes Abteil (210) mit einer ersten Toilette (240), einem ersten Waschbecken (220) und einer ersten Tür, die den Zugang zu dem ersten Abteil (210) von einem Gang des Flugzeugs aus ermöglicht,
ein zweites Abteil (215) in der Nähe des ersten Abteils (210), wobei das zweite Abteil (215) eine zweite Toilette (235), ein zweites Waschbecken (225) und eine zweite Tür umfasst, die den Zugang zu dem zweiten Abteil (215) von dem Gang des Flugzeugs aus ermöglicht, wobei
die zweite Tür in einer ersten vertikalen Ebene mit der ersten Tür fluchtet,
die zweite Toilette (235) mit der ersten Toilette (240) in einer seitlichen Position fluchtet, die von der ersten vertikalen Ebene beabstandet ist, und
eine bewegliche Wand (230) mit einer ersten Platte und einer zweiten Platte umfasst, wobei die bewegliche Wand zwischen dem ersten Abteil (210) und dem zweiten Abteil (215) angeordnet ist, wobei die bewegliche Wand (230) umfasst:
ein Mittel zum Schwenken der beweglichen Wand (230) um eine feste Achse in das zweite Abteil (215), wobei das Mittel zum Schwenken ferner einen Scharniermechanismus umfasst, der die erste Platte (245) gegenüber den Toiletten zwischen der ersten Tür und der zweiten Tür anschließt, und
eine erste Platte (245), die gelenkig oder verschiebbar mit einer zweiten Platte (250) verbunden ist, wobei
die bewegliche Wand (230) konfiguriert ist, um sich zwischen einer ersten Position, die das erste Abteil (210) und das zweite Abteil (215) trennt und für Privatsphäre dazwischen sorgt, und einer zweiten Position innerhalb des zweiten Abteils, in der sich die bewegliche Wand (230) in einem zusammengeklappten oder gefalteten Zustand befindet und das erste Abteil (210) und das zweite Abteil (215) gemeinsam einen vergrößerten Sanitärraum (265) bilden, der zur Verwendung durch Personen mit eingeschränkter Mobilität konfiguriert ist, zu bewegen und in den Positionen lösbar verriegelt zu werden;
Lösen der ersten Platte (245) aus ihrer Montageposition zwischen der ersten Toilette (240) und der zweiten Toilette (235); und
Drehen der ersten Platte (245) und der zweiten Platte (250) in das zweite Abteil (215), um den vergrößerte Sanitärraum zu bilden.

7. Verfahren nach Anspruch 6, bei dem das Lösen der ersten Platte (245) aus ihrer Einbauposition das Lösen einer außenbordseitigen Verriegelung der ersten Platte (245) von einer zwischen der ersten Toilette (240) und der zweiten Toilette (235) angeordneten außenbordseitigen Wand umfasst.

8. Verfahren nach Anspruch 6, das ferner vor dem Drehen der ersten Platte (245) und der zweiten Platte (250) das Lösen mindestens einer Bodenverriegelung in mindestens einer entsprechenden Bodenöffnung umfasst.

## Revendications

1. Bloc sanitaire d'aéronef, comprenant :
un premier compartiment (210) comprenant une première toilette (240), un premier lavabo (220), et une première porte fournissant l'accès au premier compartiment (210) depuis une allée de l'aéronef ;
un deuxième compartiment (215) à proximité du premier compartiment (210), le deuxième compartiment (215) comprenant une deuxième toilette (235), un deuxième lavabo (225) et une deuxième porte fournissant l'accès au deuxième compartiment (215) depuis l'allée de l'aéronef, où
la deuxième porte est alignée dans un premier plan vertical avec la première porte,
la deuxième toilette (235) est alignée avec la première toilette (240) à une position latérale espacée du premier plan vertical ; et
une paroi mobile (230) comprenant un premier panneau et un deuxième panneau, la paroi mobile étant disposée entre le premier compartiment (210) et le deuxième compartiment (215), la paroi mobile (230) comprenant
un premier panneau (245) relié de manière articulée ou coulissante à un deuxième panneau (250),
un moyen pour fixer de manière amovible le premier panneau (245) dans une première position séparant le premier compartiment (210) et le deuxième compartiment (215) et assurant l'intimité entre eux,
un moyen pour faire pivoter la paroi mobile (230) autour d'un axe fixe dans le deuxième compartiment (215), permettant ainsi au premier compartiment (210) et au deuxième compartiment (215) de former ensemble un espace de salle de bain agrandie (265) configuré pour être utilisé par des personnes à mobilité réduite, où le moyen de pivotement comprend un mécanisme de charnière reliant le premier panneau (245) à l'opposé des toilettes entre la première porte et la deuxième porte et un moyen pour fixer de manière amovible au moins l'un du premier panneau (245) et du deuxième panneau (250) à l'intérieur du et par rapport au deuxième compartiment (215).

2. Bloc sanitaire d'aéronef de la revendication 1, dans lequel le premier panneau (245) et le deuxième panneau (250) de la paroi mobile (230) sont configurés pour pivoter dans le deuxième compartiment (215) de sorte que le deuxième panneau (250) soit disposé sensiblement parallèlement à la première porte.

3. Bloc sanitaire d'aéronef de la revendication 1, dans lequel le premier panneau (245) et le deuxième panneau (250) de la paroi mobile (230) sont configurés pour pivoter dans le deuxième compartiment (215) de sorte que le premier panneau (245) soit sensiblement perpendiculaire à la première porte.

4. Bloc sanitaire d'aéronef de la revendication 1, dans lequel le moyen de fixation amovible comprend un premier mécanisme de verrouillage accessible depuis le premier compartiment (210) et un deuxième mécanisme de verrouillage accessible depuis le deuxième compartiment (215) .

5. Bloc sanitaire d'aéronef de la revendication 1, dans lequel le moyen de fixation amovible d'au moins l'un du premier panneau (245) et du deuxième panneau (250) comprend au moins un verrou de plancher.

6. Procédé pour équiper un aéronef d'un bloc sanitaire pour fournir un accès et un espace supplémentaire à une personne à mobilité réduite et à un assistant permettant à la personne à mobilité réduite et à l'assistant d'occuper simultanément le bloc sanitaire, le procédé comprenant les étapes consistant à :
installer, dans une zone précédemment occupée par un bloc sanitaire d'aéronef classique comprenant deux compartiments sanitaires côte à côte, un bloc sanitaire pour personnes à mobilité réduite, le bloc sanitaire comprenant
un premier compartiment (210) comprenant une première toilette (240), un premier lavabo (220), et une première porte fournissant l'accès au premier compartiment (210) depuis une allée de l'aéronef,
un deuxième compartiment (215) à proximité du premier compartiment (210), le deuxième compartiment (215) comprenant une deuxième toilette (235), un deuxième lavabo (225) et une deuxième porte fournissant l'accès au deuxième compartiment (215) depuis l'allée de l'aéronef, où
la deuxième porte est alignée dans un premier plan vertical avec la première porte,
la deuxième toilette (235) est alignée avec la première toilette (240) à une position latérale espacée du premier plan vertical, et
une paroi mobile (230) comprenant un premier panneau et un deuxième panneau, la paroi mobile étant disposée entre le premier compartiment (210) et le deuxième compartiment (215), la paroi mobile (230) comprenant
un moyen pour faire pivoter la paroi mobile (230) autour d'un axe fixe dans le deuxième compartiment (215), où le moyen de pivotement comprend en outre un mécanisme de charnière reliant le premier panneau (245) à l'opposé des toilettes entre la première porte et la deuxième porte , et
un premier panneau (245) relié de manière articulée ou coulissante à un deuxième panneau (250), où
la paroi mobile (230) est configurée pour se déplacer entre et se verrouiller en position de manière amovible à une première position séparant le premier compartiment (210) et le deuxième compartiment (215) et assurant l'intimité entre eux, et une deuxième position à l'intérieur du deuxième compartiment où la paroi mobile (230) se trouve dans un état rabattu ou plié et le premier compartiment (210) et le deuxième compartiment (215) forment ensemble un espace de salle de bain agrandie (265) configuré pour être utilisé par des personnes à mobilité réduite ;
libérer le premier panneau (245) de sa position de montage entre la première toilette (240) et la deuxième toilette (235) ; et
faire tourner le premier panneau (245) et le deuxième panneau (250) dans le deuxième compartiment (215) pour former la salle de bain agrandie.

7. Procédé de la revendication 6, dans lequel la libération du premier panneau (245) de sa position de montage comprend la libération d'un verrou extérieur du premier panneau (245) d'une cloison extérieure disposée entre la première toilette (240) et la deuxième toilette (235) .

8. Procédé de la revendication 6, comprenant en outre, avant de faire tourner le premier panneau (245) et le deuxième panneau (250), l'étape consistant à libérer au moins un verrou de plancher dans au moins une ouverture de plancher correspondante.
